# EUROPEAN PATENT SPECIFICATION

(11) **EP 4 455 922 B1**
(45) Date of publication and mention of the grant of the patent: **15.04.2026**
(21) Application number: 23881723.3
(22) Date of filing: 19.10.2023
(51) Int. Cl.: H04L 9/40, G06F 21/60, H04L 9/08, H04L 9/32

(54) **DATA PROCESSING METHOD AND APPARATUS, AND PROGRAM PRODUCT, COMPUTER DEVICE AND STORAGE MEDIUM**
DATENVERARBEITUNGSVERFAHREN UND -VORRICHTUNG SOWIE PROGRAMMPRODUKT, COMPUTERVORRICHTUNG UND SPEICHERMEDIUM
PROCÉDÉ ET APPAREIL DE TRAITEMENT DE DONNÉES, PRODUIT-PROGRAMME, DISPOSITIF INFORMATIQUE ET SUPPORT DE STOCKAGE

(30) Priority: 27.10.2022 CN 202211324998
(43) Date of publication of application: 30.10.2024
(73) Proprietor: Tencent Technology (Shenzhen) Company Limited, Shenzhen, Guangdong 518057 (CN)
(72) Inventor: LAN, Hu, Shenzhen, Guangdong 518057 (CN); GUO, Rui, Shenzhen, Guangdong 518057 (CN); LIANG, Jun, Shenzhen, Guangdong 518057 (CN); SHU, Like, Shenzhen, Guangdong 518057 (CN); WANG, Zongyou, Shenzhen, Guangdong 518057 (CN); XU, Shitao, Shenzhen, Guangdong 518057 (CN); LU, Yang, Shenzhen, Guangdong 518057 (CN); MO, Yang, Shenzhen, Guangdong 518057 (CN); CHEN, Zimin, Shenzhen, Guangdong 518057 (CN); QIN, Bo, Shenzhen, Guangdong 518057 (CN); LIANG, Zuodong, Shenzhen, Guangdong 518057 (CN); HUANG, Guihong, Shenzhen, Guangdong 518057 (CN); ZHANG, Hui, Shenzhen, Guangdong 518057 (CN); LU, Jiangwei, Shenzhen, Guangdong 518057 (CN); SHI, Yifang, Shenzhen, Guangdong 518057 (CN); LIU, Hanqing, Shenzhen, Guangdong 518057 (CN); LIAO, Zhiyong, Shenzhen, Guangdong 518057 (CN); LIU, Qucheng, Shenzhen, Guangdong 518057 (CN); ZHU, Gengliang, Shenzhen, Guangdong 518057 (CN); SHE, Shihao, Shenzhen, Guangdong 518057 (CN); FAN, Tao, Shenzhen, Guangdong 518057 (CN); GAO, Cong, Shenzhen, Guangdong 518057 (CN); NIE, Kaixuan, Shenzhen, Guangdong 518057 (CN); HUANG, Yangjun, Shenzhen, Guangdong 518057 (CN); QI, Chaojie, Shenzhen, Guangdong 518057 (CN); LI, Lisen, Shenzhen, Guangdong 518057 (CN); LI, Jun, Shenzhen, Guangdong 518057 (CN); ZHANG, Yifang, Shenzhen, Guangdong 518057 (CN)
(74) Representative: Gunzelmann, Rainer
(86) International application number: PCT/CN2023/125366
(87) International publication number: WO 2024/088145

(56) References cited:
- EP-A1- 3 657 751
- WO-A1-2019/218919
- WO-A1-2021/063484
- WO-A1-2022/105462
- CN-A- 103 001 976
- CN-A- 111 008 094
- CN-A- 111 416 807
- CN-A- 111 884 810
- CN-A- 113 972 985
- CN-A- 114 036 539
- US-A1- 2019 215 157
- US-A1- 2019 319 939
- US-A1- 2020 259 637
- US-A1- 2021 051 003
- US-A1- 2022 182 368
- US-A1- 2022 255 737

## Description

### FIELD OF THE TECHNOLOGY

The present disclosure relates to the field of data processing technologies, and in particular, to a data processing method and apparatus, a program product, a computer device, and a medium.

### BACKGROUND OF THE DISCLOSURE

For a client that requires identity authentication using a key pair (including a public key and a private key) to initiate service processing, the private key is particularly important for the service processing of the client. Therefore, the private key on the client needs to be properly kept.

In some applications, to ensure security of a private key of a user on a client, the private key on the client is generally kept by the user.

CN111884810A recites the mobile terminal browser first obtains the pre-encrypted private key ciphertext corresponding to the user from the blockchain application node server through encrypted transmission to ensure the information security of users during token transactions and prevent the leakage of transaction information.

US2022182368A1 recites an encrypted private key is uploaded to zkWallet Server, and the zkWallet Server stores the encrypted private key with user credentials (email/username/ID); the zkWallet Server sends confirmation to the zkWallet client, and the private key is then purged from the zkWallet client.

EP3657751A1 recites a private key is securely stored in a cloud storage using the customer secret to encrypt the private key; the storage may be over-protected by applying further local protection in the cloud server, possibly depending on the user account; the key pair and in particular the private key is forgotten, i.e. removed from temporary memory in the SEE.

US20190215157A1 recites a second preset encryption algorithm, which may be a hash algorithm such as HMAC-SHA256, is used for signing and verifying a private key. After the private key ciphertext and the signature information of the private key are obtained, the signature information of the private key can be placed behind the private key ciphertext, thereby obtaining the to-be-stored ciphertext. The terminal device sends an information storage request to a server, the information storage request carrying a first user identifier, the account address, and the to-be-stored ciphertext.

US2020259637A1 recites an encrypted private key that is remotely stored in the distributed environment and which is associated with the key encryption key may be retrieved from the distributed environment. Further to the hash of the key encryption key, a hash of the private key may be stored in the respective cloud storage of the distributed environment.

### SUMMARY

The present invention is defined by the appended claims. Any examples and embodiments of the description not falling within the scope of the claims do not form part of the invention as defined by the independent claims. The present disclosure provides a data processing method, applied to a terminal device including a first client, the first client having a key pair, the key pair including a public client key and a private client key, the first client having encrypted data of the private client key, the encrypted data being obtained by encrypting the private client key according to an object password, and the method including:
receiving the object password in response to obtaining a cloud hosting request for the encrypted data;
decrypting the encrypted data by using the received object password to obtain the private client key;
signing the encrypted data based on the private client key to obtain a signature of the encrypted data; and
transmitting the public client key, the encrypted data, and the signature of the encrypted data to a cloud device of the first client, the cloud device storing the encrypted data after verifying the encrypted data based on the public client key and the signature of the encrypted data.

The present disclosure provides a data processing apparatus, applied to a terminal device including a first client, the first client having a key pair, the key pair including a public client key and a private client key, the first client storing encrypted data of the private client key, the encrypted data being obtained by encrypting the private client key according to an object password, and the apparatus including:
a receiving module, configured to receive the object password in response to obtaining a cloud hosting request for the encrypted data;
a decryption module, configured to decrypt the encrypted data by using the received object password to obtain the private client key;
a signature module, configured to sign the encrypted data based on the private client key to obtain a signature of the encrypted data; and
a transmission module, configured to transmit the public client key, the encrypted data, and the signature of the encrypted data to a cloud device of the first client, the cloud device storing the encrypted data after verifying the encrypted data based on the public client key and the signature of the encrypted data.

The present disclosure provides a computer device, including a memory and a processor, the memory having a computer program stored therein, the computer program, when executed by the processor, causing the processor to perform the method in the embodiments of the present disclosure.

The present disclosure provides a computer-readable storage medium, having a computer program stored therein, the computer program including program instructions, the program instructions, when executed by a processor, causing the processor to perform the method in the foregoing embodiment of the present disclosure.

According to an aspect of the present disclosure, a computer program product or a computer program is provided, the computer program product or the computer program including computer instructions, the computer instructions being stored in a computer-readable storage medium. A processor of a computer device reads the computer instructions from the computer-readable storage medium, and executes the computer instructions, so that the computer device performs the method provided in various implementations.

### BRIEF DESCRIPTION OF THE DRAWINGS

To describe the technical solutions in the present disclosure or in the related art more clearly, the following briefly describes the accompanying drawings required for describing the embodiments or the related art. Apparently, the accompanying drawings in the following description show only some embodiments of the present disclosure, and a person of ordinary skill in the art may derive other drawings from the accompanying drawings without creative efforts.
FIG. 1 is a schematic structural diagram of a network architecture according to the present disclosure.
FIG. 2 is a scenario diagram of data processing according to the present disclosure.
FIG. 3 is a schematic flowchart of a data processing method according to the present disclosure.
FIG. 4 is a schematic diagram of an interface for setting passwords according to the present disclosure.
FIG. 5 is a schematic diagram of a scenario of obtaining a signature of encrypted data according to the present disclosure.
FIG. 6 is a schematic flowchart of an address registration method according to the present disclosure.
FIG. 7 is a schematic diagram of an interface of a client according to the present disclosure.
FIG. 8 is a schematic flowchart of a data recovery method according to the present disclosure.
FIG. 9 is a schematic flowchart of a data backup method according to the present disclosure.
FIG. 10 is a schematic diagram of a scenario of local backup of data according to the present disclosure.
FIG. 11 is a schematic flowchart of a client connection method according to the present disclosure.
FIG. 12 is a schematic flowchart of a client connection according to the present disclosure.
FIG. 13 is a schematic diagram of a scenario of a transaction method according to the present disclosure.
FIG. 14 is a schematic flowchart of transaction execution according to the present disclosure.
FIG. 15 is a schematic flowchart of a password changing method according to the present disclosure.
FIG. 16 is a schematic diagram of an interface for password changing according to the present disclosure.
FIG. 17 is a schematic structural diagram of a data processing apparatus according to the present disclosure.
FIG. 18 is a schematic structural diagram of a computer device according to the present disclosure.

### DESCRIPTION OF EMBODIMENTS

The technical solutions of the present disclosure are clearly and completely described below with reference to the accompanying drawings of the present disclosure. Apparently, the described embodiments are merely some rather than all of the embodiments of the present disclosure. All other embodiments obtained by a person skilled in the art based on the embodiments of the present disclosure without creative efforts shall fall within the protection scope of the present disclosure.

The present disclosure relates to blockchain-related technologies. In the embodiments of the present disclosure including the embodiments of both the claims and the specification (hereinafter referred to as "all embodiments of the present disclosure"). A blockchain is a new application mode of computer technologies such as distributed data storage, point-to-point transmission, a consensus mechanism, and an encryption algorithm. The blockchain is essentially a decentralized database and a series of associated data blocks generated in a cryptographic manner. Each data block includes information about a batch of network transactions for verifying the validity of the information (for anti-counterfeiting) and generating a next block. The blockchain may include an underlying blockchain platform, a platform product service layer, and application service layer. The blockchain includes a series of blocks that are consecutively generated in a chronological order. Once a new block is added to the blockchain, the new block can no longer be removed. The block records recorded data submitted by the node in the blockchain system. A first client in the present disclosure may refer to a client built based on a blockchain, and a background of the first client may refer to a blockchain network.

The present disclosure further relates to cloud technology. The cloud technology is a hosting technology that unifies a series of resources such as hardware, software, and networks in a wide area network or a local area network to implement computing, storage, processing, and sharing of data.

The cloud technology is a collective name of a network technology, an information technology, an integration technology, a management platform technology, an application technology, and the like based on an application of a cloud computing business mode, and may form a resource pool, which is used as required, and is flexible and convenient. The cloud computing technology becomes an important support. A backend service of a technical network system requires a large amount of computing and storage resources, such as video websites, image websites, and more portal websites. As the Internet industry is highly developed and applied, each article may have its own identifier in the future and needs to be transmitted to a backend system for logical processing. Data at different levels is separately processed, and data in various industries requires strong system support, which can only be implemented through cloud computing.

The cloud technology described in the present disclosure may indicate that communication between the first client and a cloud device is performed through the "cloud".

First, all data (for example, identity information of an object, an object password, and other related data) acquired in the present disclosure is acquired with the consent and authorization of an object (for example, a user, an enterprise, or an institution) to which the data belongs, and acquisition, use, and processing of related data need to comply with relevant laws, regulations and standards of relevant countries and regions.

As described above, in some applications, to ensure security of a private key of a user on a client, the private key on the client is generally kept by the user. However, when the private key is kept by the user, once the user loses the private key, the user can no longer perform any service processing on an account corresponding to the private key, causing large losses to the user.

The present disclosure provides a data processing method and apparatus, a program product, a computer device, and a medium, which can improve reliability and security of keeping a private client key by an object.

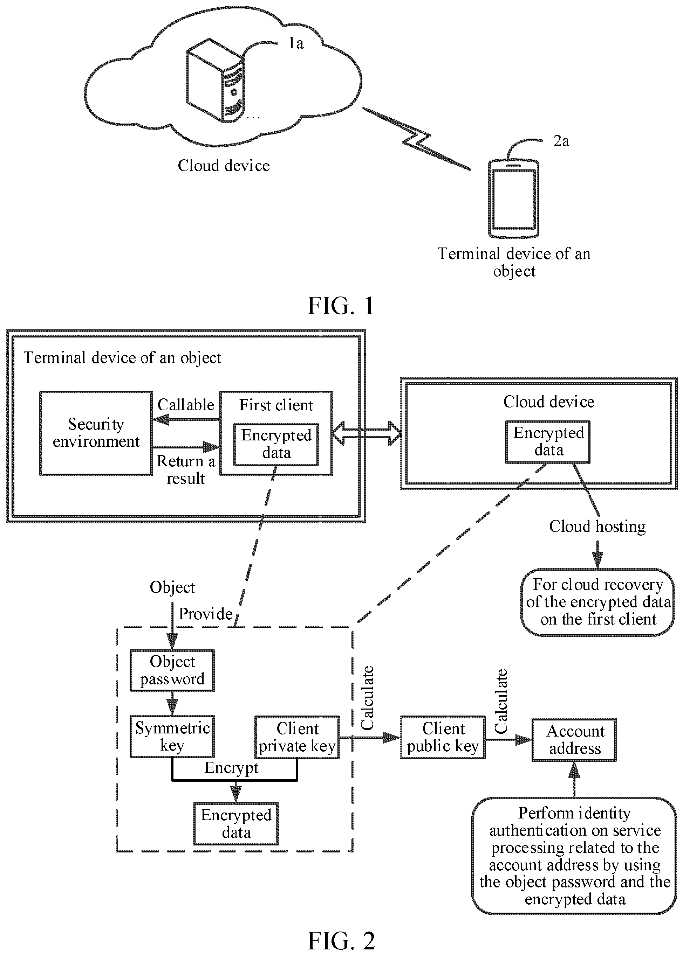

FIG. 1 is a schematic structural diagram of a network architecture to which a data processing method is applicable according to the present disclosure. As shown in FIG. 1, the network architecture may include a cloud device 1a and a terminal device 2a of an object. The terminal device 2a may include a first client, and the cloud device 1a may be a backend device of the first client. There may be a network connection between the cloud device 1a and the terminal device 2a, so that data may be exchanged between the cloud device 1a and the terminal device 2a.

The cloud device 1a shown in FIG. 1 may be a server. The server may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The terminal device 2a may be a smart terminal such as a smartphone, a tablet, a laptop, a desktop computer, a smart television, or an in-vehicle terminal, or may be a wearable smart terminal such as a smart watch, a smart bracelet, a virtual reality helmet, or glasses.

Referring to FIG. 2, FIG. 2 is a scenario diagram of data processing according to the present disclosure. As shown in FIG. 2, a terminal device 2a of an object may include a first client and a security environment callable by the first client. The security environment may be an execution environment that is in the terminal device 2a of the object and isolated from the first client, and the security environment may be provided by the terminal device 2a.

In all embodiments of the present disclosure, the object has a key pair on the first client. The key pair may also be referred to as a key pair of the first client. The key pair may include a public key (which may be referred to as a public client key) and a private key (which may be referred to as a private client key) of the first client. The public client key and the private client key are the public key and the private key of the object in the first client. The first client does not directly store the private client key, but may store encrypted data of the private client key. The encrypted data is obtained by encrypting the private client key by using an object password of the object. Specifically, a symmetric key may be first generated by using the object password, and then the private client key may be encrypted by using the symmetric key to obtain the encrypted data. The object password may be understood as a password set by the object. The object password may be a password in any format. For example, the object password may be a character password set by the object or a gesture password set by the object, or the like.

The object may cloud-host the encrypted data stored in the first client on the first client, that is, host the encrypted data to a cloud device 1a of the first client. Subsequently, if the encrypted data in the first client is lost, the encrypted data in the first client may be recovered by using the cloud-hosted encrypted data.

Moreover, the public client key of the object may be calculated by using the private client key of the object on the first client, and an account address of the object on the first client may further be calculated by using the public client key. Subsequently, the first client may perform identity authentication on service processing related to the account address by using the object password entered by the object and the encrypted data stored in the first client, to implement the service processing related to the account address.

Moreover, in the present disclosure, all processing operations involving the object password and the private client key of the object may be performed by the first client by calling the security environment in the terminal device 2a of the object. The security environment is an execution environment isolated from the first client. Therefore, this can ensure that the first client cannot obtain the object password and the private client key of the object. In addition, the encrypted data of the private client key is cloud-hosted. This prevents the background (namely, the cloud device 1a) of the first client from obtaining the object password and the private client key of the object, and further prevents the first client and the background of the first client from misappropriating the object password and the private client key of the object for service processing, ensuring security and confidentiality of the object password and the private client key of the object.

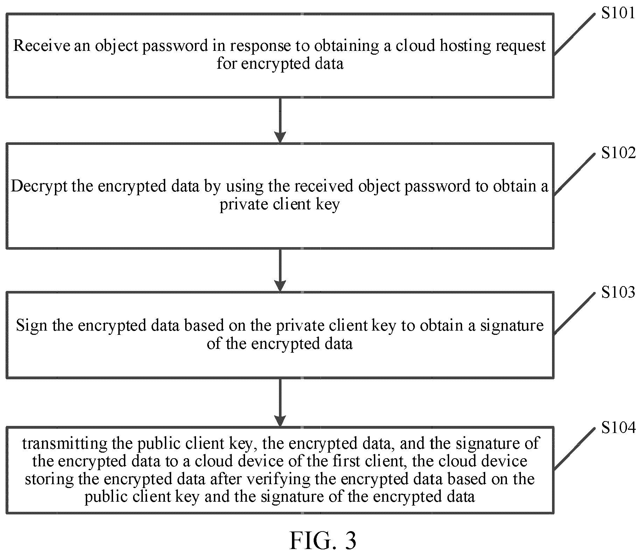

FIG. 3 is a schematic flowchart of a data processing method according to the present disclosure. In all embodiments of the present disclosure, an execution entity may be a first client. In other words, this embodiment of the present disclosure may be applied to the first client (where for a detailed description of the first client, refer to the following operations). The first client may be included in a computer device. In other words, operations performed by the first client may be performed through the computer device in which the first client is located. The computer device may be a terminal device of an object, or may be another device capable of including the first client. This may be specifically determined according to a specific scenario, and is not limited herein. The object may be any user, institution, or enterprise, or the like. As shown in FIG. 3, the method may include the following operations.

Operation S101: Receive an object password in response to obtaining a cloud hosting request for encrypted data.

In all embodiments of the present disclosure, the first client (belonging to a front end) may be any client that requires identity authentication using a key pair (for example, data is signed by using a private key in the key pair to implement identity authentication to prove that the data is initiated by the first client). The first client may be a client in any form such as a web client, an applet client, or an application (APP) client.

An object may have a key pair on the first client, where the key pair may also be referred to as a key pair of the first client. The key pair may include a private key (which may be referred to as a private client key) and a public key (which may be referred to as public client key) of the object on the first client. In all embodiments of the present disclosure, after receiving an object password entered by the object, the first client may generate the key pair of the object on the first client. The first client may generate the key pair of the object on the first client by using a relevant asymmetric encryption algorithm. The generated key pair includes the public client key and the private client key of the object on the first client. During generation of the key pair, the private client key of the object is first generated, and then the public client key of the object is generated by using the private client key. However, the private client key cannot be derived from the public client key.

In the process of generating the key pair of the object on the first client, the terminal device first locally generates a large random number whose randomness meets requirements of a cryptographic algorithm, generates the private client key based on the large random number according to a calculation process of the asymmetric encryption algorithm, and then uses the private client key to derive the public client key.

Therefore, the key pair may be an asymmetric key pair, and data encrypted by using the private client key may be decrypted by using the public client key. Conversely, data encrypted by using the public client key may also be decrypted by using the private client key.

The first client may not store a plaintext of the private client key of the object. In other words, the first client does not directly store the private client key of the object. The first client may store encrypted data of the private client key. The encrypted data may be obtained by encrypting the private client key by using the object password of the object. The object password may be understood as a password configured for encrypting the private client key of the object on the first client.

The following is a detailed description of the process in which the object obtains the key pair on the first client and the first client stores the encrypted data of the private client key of the object.

In response to obtaining an account creation request (which may be initiated by the object through an account creation button in the first client), the first client may ask the object to enter his/her password (which may be referred to as the object password). For example, the first client may display an input box for entering a password on a client interface. The object may enter the object password that needs to be set in the input box and click to confirm. Therefore, the first client may receive the object password entered by the object.

In all embodiments of the present disclosure, a type of the object password may be determined according to a specific scenario, and is not limited herein. For example, the object password of the object may be a string (which may include letters, numbers or/and symbols, and the like) entered by the object or a gesture password, or the like.

After receiving the object password entered by the object, the first client may generate the key pair of the object on the first client. As described above, the first client may generate the key pair of the object on the first client by using a relevant asymmetric encryption algorithm. The generated key pair includes the public client key and the private client key of the object on the first client. During generation of the key pair, the private client key of the object is first generated, and then the public client key of the object is generated by using the private client key. However, the private client key cannot be derived from the public client key.

Further, the first client may use the object password entered by the object to encrypt the private client key in the foregoing generated key pair, to obtain the encrypted data of the private client key. For example, the first client may first generate a symmetric key according to the object password entered by the object, and then encrypt the private client key by using the symmetric key, to obtain the encrypted data of the private client key. In all embodiments of the present disclosure, the first client may generate the corresponding symmetric key according to the object password by using a relevant symmetric encryption algorithm (for example, an SM4 algorithm).

As can be learned about the symmetric key, data encrypted by using the symmetric key may also be decrypted by using the symmetric key. The symmetric key includes only one key. In other words, for the symmetric key, the data is encrypted and decrypted by using the same key.

Moreover, the first client may further use the public client key in the foregoing generated key pair to generate an account address of the object on the first client (where the account address may be referred to as a target account address).

The first client may generate the target account address of the object on the client by using the public client key according to a preset address generation rule. The address generation rule may be set according to a specific scenario, and is not limited herein.

For example, the first client may directly use the public client key as the target account address (which may also be referred to as a target account address of the first client) of the object on the first client. Alternatively, the first client may perform hash calculation on the public client key to obtain a hash value of the public client key, and use the hash value as the target account address of the object on the first client, and so on.

Further, the first client may associatively store the foregoing generated target account address and the encrypted data of the private client key. The associated storage may be a two-way mapping. To be specific, the encrypted data may be associatively found based on the target account address, and the target account address may also be associatively found based on the encrypted data.

The first client may perform service processing on the target account address according to the stored encrypted data. For example, a resource (for example, a digital resource, where the digital resource may be a digital collection or the like) of the object may be stored under the target account address. The first client may perform service processing such as transferring (for example, transferring to another object) on the resource of the object under the target account address according to the stored encrypted data.

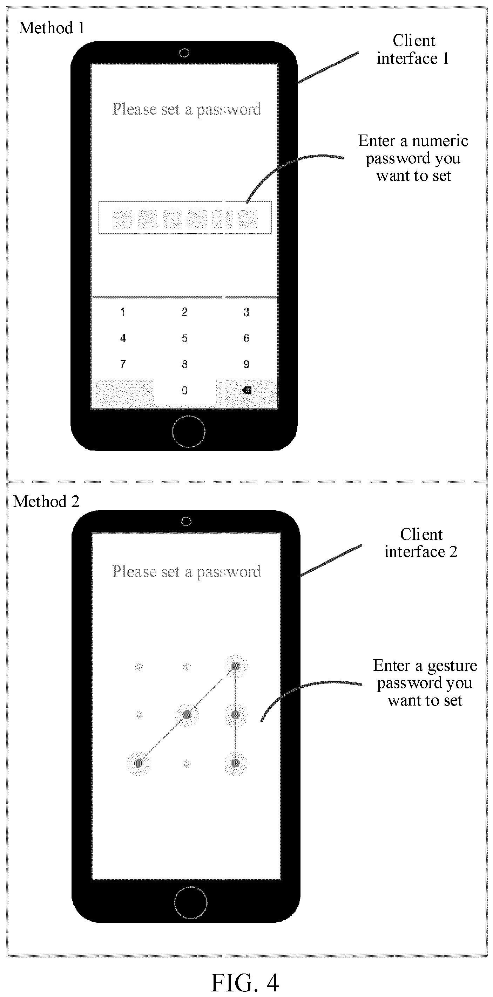

FIG. 4 is a schematic diagram of an interface for setting passwords according to the present disclosure. As shown in FIG. 4, a client interface 1 and a client interface 2 are both client interfaces of a first client. An object may set a numeric password as his/her object password on the client interface 1, or the object may also set a gesture password as his/her object password on the client interface 2.

Moreover, the first client may be a client in a terminal device of the object, and the terminal device of the object may be referred to as a target device. The terminal device of the object may further include a security environment callable by the first client. The security environment does not belong to the first client. The security environment may be provided in the terminal device of the object. The security environment is an execution environment isolated from the first client.

The security environment may be a hardware environment provided by a chip (for example, a security chip or an encryption chip) integrated in the terminal device of the object, or the security environment may be a trusted software environment built in the terminal device of the object. For example, the security environment may be a Trusted Execution Environment (TEE). In the security environment, service processing that is trusted, secure, and isolated from the outside world can be performed. Because the security environment is isolated from the first client, the first client cannot learn and obtain data processed in the security environment.

Therefore, all operations involving processing the object password and the private client key in the present disclosure may be performed by the first client by calling the security environment in the terminal device of the object.

For example, the operation of the first client receiving the object password entered by the object, the operation of the first client generating the key pair of the object after receiving the object password entered by the object, and the operation of encrypting the private client key by using the object password to obtain the encrypted data above may all be performed by the first client by calling the security environment. This prevents the first client from learning and obtaining the object password and the private client key of the object, thereby improving security and confidentiality of the object password and the private client key of the object on the front end. This further prevents the first client from misappropriating the object password and the private client key of the object for service processing

Therefore, the encrypted data of the private client key obtained by the first client may be obtained based on the security environment. For example, after calling the security environment to generate a key pair and obtaining the encrypted data of the private client key, the first client calls the security environment to directly provide a service processing result (for example, the encrypted data of the private client key and the public client key) to the first client.

The first client may calculate the foregoing target account address according to the public client key obtained by calling the security environment, and may associatively store the target account address and the encrypted data obtained by calling the security environment. The first client may then perform corresponding service processing on the target account address according to the stored encrypted data, and the object creates an account successfully.

Moreover, relevant service logic for the first client to call the security environment for service processing may be encapsulated and configured into the security environment when the first client is installed in the terminal device.

**In** all embodiments of the present disclosure, if the terminal device of the object does not include the security environment callable by the first client, the operations involving processing the object password and the private client key of the object may also be performed by the first client. The first client may delete the cached object password and the cached private client key after performing corresponding service processing on the object password and the private client key of the object. In this case, the first client may protect the object password and the private client key of the object by using another security level protection mechanism, and needs to make a commitment (for example, through a protocol) to the object, to ensure that the object password or/and the private client key of the object do not leave the terminal device of the object, and the first client does not misappropriate the object password or/and the private client key of the object for service processing.

Moreover, if the terminal device of the object does not include the security environment callable by the first client, the first client also needs to delete the cached object password and the cached private client key in time after currently completing the related operations on the object password entered by the object and the private client key obtained through the decryption.

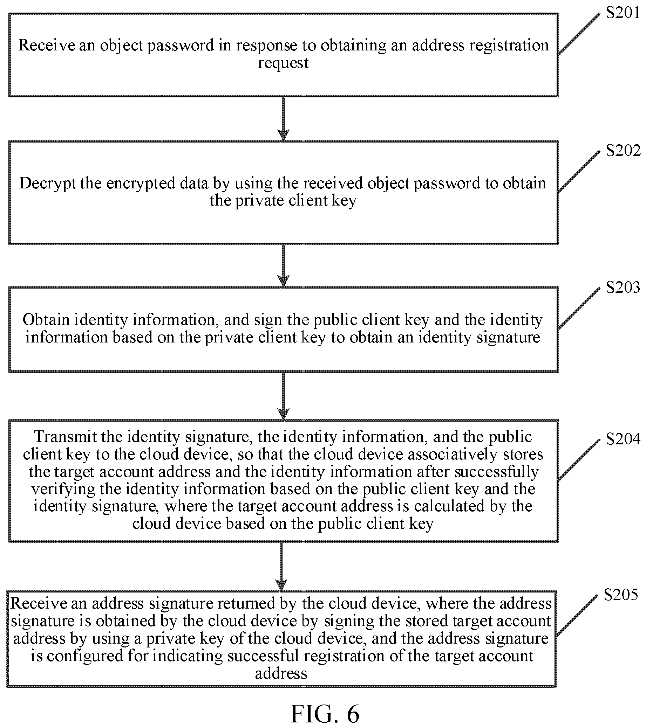

In all embodiments of the present disclosure, after creating the account, the object may perform cloud registration (namely, backend registration) on the created target account address by using his/her real-name information (for example, real-name identity information) to complete real-name registration of the object. For a process of registering the target account address through the real-name information, refer to a relevant description in an embodiment corresponding to FIG. 6 below. For an area with real-name regulations, the object may request cloud hosting (namely, backup) for the encrypted data after completing the real-name registration of the target account address. Alternatively, in an area without real-name regulations, the object may also request cloud hosting for the encrypted data without completing the real-name registration of the target account address. This may be specifically determined according to relevant laws and regulations of the area. A cloud hosting process for the encrypted data may be described as follows.

After the encrypted data is stored, if the first client obtains a cloud hosting request (which may be initiated by the object through a private key hosting control in the first client, and carries an identifier of the private key hosting control and a client identifier of the first client) for the encrypted data, the first client may ask the object to enter the object password (for example, display a password input box for the object to enter), and the first client may receive the object password entered by the object. According to the foregoing description, if the terminal device of the object includes the security environment, the operation of the first client receiving the object password entered by the object may be performed by the first client by calling the security environment. If the terminal device of the object does not include the security environment, the operation of receiving the object password entered by the object may be performed by the first client.

Operation S102: Decrypt the encrypted data by using the received object password to obtain the private client key.

Specifically, the first client may use the received object password to decrypt the stored encrypted data to obtain the private client key (namely, the private key of the first client) of the object on the first client. For example, the first client may alternatively calculate the foregoing symmetric key by using the object password entered by the object, and then use the symmetric key to decrypt the stored encrypted data to obtain the private client key of the object.

**In** response to the terminal device of the object including the security environment callable by the first client, the first client may alternatively call the security environment to perform the foregoing operation of decrypting the encrypted data by using the object password entered by the object to obtain the private client key of the object.

According to the foregoing description in operation S101, if the terminal device of the object does not include the security environment, the operation of decrypting the encrypted data by using the object password entered by the object to obtain the private client key of the object may be performed by the first client.

Operation S103: Sign the encrypted data based on the private client key to obtain a signature of the encrypted data.

Specifically, the first client may use the private client key obtained through the decryption to sign the encrypted data to obtain the signature of the encrypted data. If the terminal device of the object includes the security environment, the operation of the first client signing the encrypted data by using the private client key obtained through the decryption to obtain the signature of the encrypted data may alternatively be performed by the first client by calling the security environment. After the security environment is called to obtain the signature of the encrypted data, the signature of the encrypted data may be provided to the first client. Therefore, the signature of the encrypted data obtained by the first client may be obtained based on the security environment.

According to the foregoing description in operation S101, if the terminal device of the object does not include the security environment, the operation of signing the encrypted data by using the private client key obtained through the decryption to obtain the signature of the encrypted data may alternatively be performed by the first client.

In all embodiments of the present disclosure, the process of signing the encrypted data by using the private client key to obtain the signature of the encrypted data may include: performing hash calculation on the encrypted data to obtain a hash value of the encrypted data, and encrypting the hash value of the encrypted data by using the private client key to obtain the signature of the encrypted data.

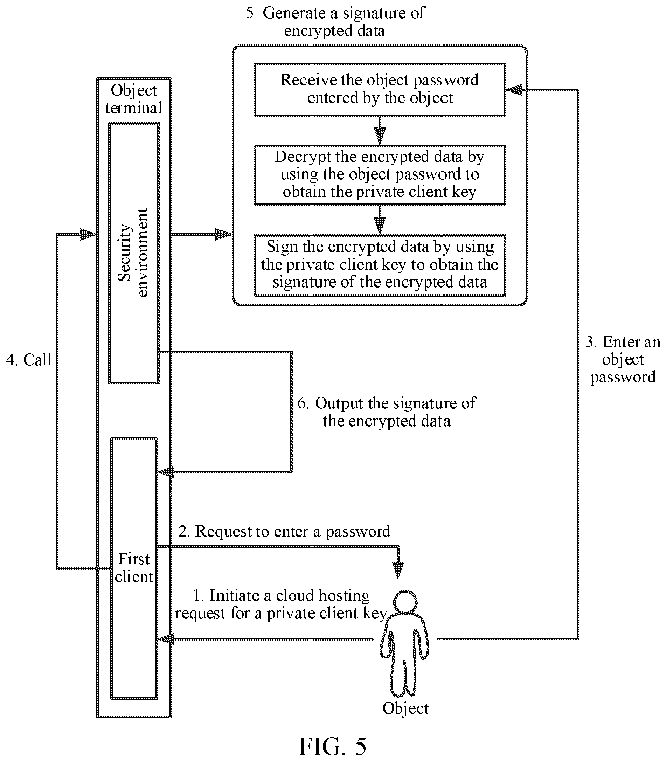

FIG. 5 is a schematic diagram of a scenario of obtaining a signature of encrypted data according to the present disclosure. As shown in FIG. 5, an object terminal (namely, a terminal device of an object) includes a security environment and a first client. The object may initiate, in the first client, a cloud hosting request for a private client key (which may be for the private client key from the perspective of perception of the object, but may be actually for the encrypted data), and then the first client may request the object to enter a password (which is set by the user when generating a key pair).

The first client may call a security environment to receive the object password entered by the object. Therefore, the security environment may receive the object password entered by the object. Further, the security environment may use the object password entered by the object to decrypt the encrypted data (which may be provided by the first client) to obtain the private client key.

The security environment may further use the private client key obtained through the decryption to sign the encrypted data to obtain the signature of the encrypted data. The security environment may output the signature of the encrypted data to the first client, so that the first client obtains the signature of the encrypted data.

Operation S104: Transmit the public client key, the encrypted data, and the signature of the encrypted data to a cloud device of the first client, so that the cloud device stores the encrypted data after successfully verifying the encrypted data based on the public client key and the signature of the encrypted data.

Specifically, the first client may obtain a public client key of the object. The public client key may be pre-stored (for example, pre-stored during account creation) in the first client. The public client key may also be calculated based on the private client key obtained through the decryption. The first client may send the public client key, the encrypted data, and the signature of the encrypted data to the cloud device, so that the cloud device stores the encrypted data after successfully verifying the encrypted data by using the public client key and the signature of the encrypted data (ensuring that the encrypted data is reliable data sent by the first client), to implement hosting of the encrypted data.

The cloud device may be understood as a backend device of the first client. The cloud device may be formed by one or more computer devices. The computer device may be a server or another device. This may be specifically determined according to a specific scenario.

In all embodiments of the present disclosure, a process in which the cloud device performs verification on the encrypted data by using the public client key and the signature of the encrypted data may include: The cloud device may use the public client key to decrypt the signature of the encrypted data to obtain a determined hash value (a first hash value) of the encrypted data. The cloud device may further perform hash calculation on the received encrypted data to obtain a to-be-verified hash value (a second hash value) of the encrypted data.

Further, the cloud device may compare the determined hash value with the to-be-verified hash value. If the comparison shows that the determined hash value and the to-be-verified hash value are the same, it may be determined that the verification on the encrypted data succeeds. Otherwise, if the comparison shows that the determined hash value and the to-be-verified hash value are different, it may be determined that the verification on the encrypted data fails.

In all embodiments of the present disclosure, after successfully verifying the encrypted data, the cloud device may further calculate the foregoing target account address of the object on the first client based on the obtained public client key, and the cloud device may detect whether the target account address has been successfully registered in the backend. If the registration succeeds, the cloud device may associatively store the received encrypted data and the target account address.

The encrypted data and the target account address that are associatively stored may be understood as a two-way mapping. The target account address may be associatively found by the cloud device based on the encrypted data, and the encrypted data may also be associatively found based on the target account address.

In the present disclosure, when the private client key is cloud-hosted, the private client key (namely, a plain text of the private client key) is not directly hosted and stored in the cloud device. Instead, the encrypted data of the private client key is stored and hosted in the cloud device, so that the cloud device (background) cannot learn and obtain the private client key of the object, and therefore cannot misappropriate the private client key of the object for service processing. Therefore, by using the method provided in the present disclosure, while the hosting of the private client key in the cloud device is implemented, confidentiality and security of the private client key in the cloud device can also be ensured.

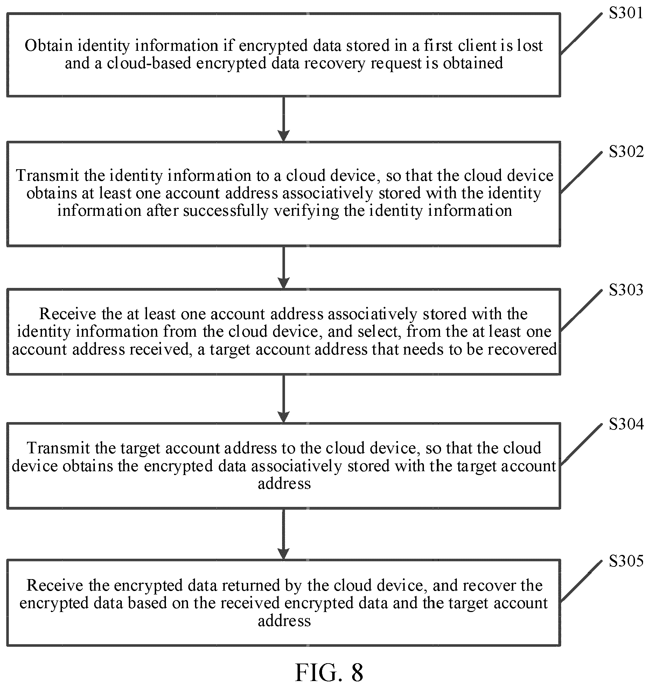

Subsequently, if the encrypted data stored in the first client in the terminal device of the object is lost (for example, the terminal device of the object is lost or the encrypted data is lost after system reinstallation), the object may also recover the encrypted data on the first client by using the encrypted data stored in the cloud device. For this process, refer to a detailed description in an embodiment corresponding to FIG. 8 below.

In the present disclosure, the first client has a key pair, the key pair may include a public client key and a private client key, the first client stores encrypted data of the private client key, and the encrypted data is obtained by encrypting the private client key based on an object password. The first client may receive the object password if obtaining a cloud hosting request for the encrypted data, may decrypt the encrypted data by using the received object password to obtain the private client key, and may further sign the encrypted data based on the private client key to obtain a signature of the encrypted data. Further, the first client may transmit the public client key, the encrypted data, and the signature of the encrypted data to a cloud device of the first client, so that the cloud device stores the encrypted data after successfully verifying the encrypted data based on the public client key and the signature of the encrypted data. According to the method provided in the present disclosure, the encrypted data of the private client key can be cloud-hosted. Through the cloud hosting for the encrypted data, reliability of keeping the private client key is achieved. Instead of hosting the private client key directly in the cloud device, the encrypted data of the private client key is hosted in the cloud device. Therefore, while implementing the cloud hosting for the private client key, security and confidentiality of the private client key are also guaranteed.

FIG. 6 is a schematic flowchart of an address registration method according to the present disclosure. In all embodiments of the present disclosure, an execution entity may also be the foregoing first client included in the terminal device. Cloud registration of the address may also be understood as real-name registration of the object. As shown in FIG. 6, the method includes the following operations.

Operation S201: Receive an object password in response to obtaining an address registration request.

Specifically, in response to obtaining the address registration request (which may be initiated by the object through an address registration control in the first client, and carries an identifier of the address registration control and an identifier of the first client), the first client may request the object to enter a password (for example, displaying an input box for entering a password or voice input), and the first client may receive the object password entered by the object.

The object in the present disclosure may have one or more key pairs in the first client, and one key pair corresponds to one object password (where the object password is configured for encrypting and decrypting a private client key in the corresponding key pair) and one account address (calculated based on a public key in the key pair). In other words, the object may have one or more account addresses (namely, a plurality of accounts) in the first client. Different key pairs may correspond to the same object password or different object passwords. This may be determined according to a password actually set by the object for each key pair.

If there are a plurality of account addresses, and the first client is built based on a blockchain (namely, a blockchain network), the plurality of account addresses may exist on the same blockchain or different blockchains. In other words, there may be a plurality of blockchains in the backend of the first client. For example, the first client is a resource package application. The resource package application may be an application for managing a resource (for example, a digital resource, where the digital resource may be a resource such as a data collection) of the object. The first client is built based on a blockchain. The object has a corresponding resource under each of the plurality of account addresses. In this case, digital resources of the object under the account addresses may exist on different blockchains.

In the present disclosure, principles for performing related processing (for example, address registration, cloud backup of the encrypted data, local backup of the encrypted data, cloud recovery of the encrypted data, local backup of the encrypted data, interaction between the first client and the second client, and transaction initiation on the first client) on each key pair (or each account address) of the object on the first client are all the same. Therefore, the present disclosure is described by using the process of processing a key pair (which may be any key pair) of the object in the first client as an example. An account address corresponding to the key pair may be the following target account address. The object password entered by the object described in the present disclosure may be an object password corresponding to the key pair. In other words, the public client key, the private client key, the encrypted data, the object password, and the target account address separately described in the present disclosure may all match and correspond to the key pair described in this example.

In all embodiments of the present disclosure, if the terminal device of the object includes a security environment callable by the first client, the operation of the first client receiving the object password of the object may be performed by the first client by calling the security environment.

Operation S202: Decrypt the encrypted data by using the received object password to obtain the private client key.

Specifically, the first client may use the object password entered by the object to decrypt the stored encrypted data. For example, a symmetric key is calculated by using the object password, and the encrypted data is decrypted by using the symmetric key, to obtain the private client key of the object on the first client (where in this case, the object needs to enter the correct object password).

In all embodiments of the present disclosure, if the terminal device of the object includes a security environment callable by the first client, the operation of the first client using the object password entered by the object to decrypt the encrypted data to obtain the private client key may be performed by the first client by calling the security environment.

Operation S203: Obtain identity information, and sign the public client key and the identity information based on the private client key to obtain an identity signature.

Specifically, the first client may request the object to enter relevant identity information (relevant information that can prove an identity of the object, which may be determined according to actual application, and may include, for example, information such as an identity number and a name of the object in an authoritative institution). The first client may obtain the identity information entered (or imported) by the object.

The first client may perform verification on the identity information entered by the object. If the verification succeeds, the private client key obtained through the decryption may be used to sign the public client key (where the public client key may be calculated by using the private client key obtained through the decryption, or may be pre-stored by the first client) and the identity information together. The signature obtained herein may be referred to as an identity signature. The public client key of the object and the identity information of the object are signed together, thereby binding the public client key and the identity information of the object.

For example, the first client may request or call an authoritative institution (for example, an institution that issues an identity number) related to the identity information entered by the object to perform verification on the identity information entered by the object, to perform verification on whether the identity information entered by the object is identity information issued or published in the authoritative institution. If the identity information is issued or released in the authoritative institution, it may be determined that the verification on the identity information entered by the object succeeds.

In all embodiments of the present disclosure, the process in which the first client uses the foregoing private client key obtained through the decryption to sign the public client key and the identity information together may include: The first client may splice the public client key and the identity information, to obtain spliced information. Further, the first client may calculate a hash value of the spliced information, and may encrypt the hash value of the spliced information by using the private client key obtained through the decryption, to obtain the foregoing identity signature.

Operation S204: Transmit the identity signature, the identity information, and the public client key to the cloud device, so that the cloud device associatively stores the target account address and the identity information after successfully verifying the identity information based on the public client key and the identity signature, where the target account address is calculated by the cloud device based on the public client key.

Specifically, the first client may send the identity signature, the identity information entered by the object, and the public client key to the cloud device, so that the cloud device may associatively store (or store in a two-way mapping manner) the target account address (where the target account address may be calculated by the cloud device by using the received public client key after successfully verifying the identity information) of the object and the identity information after successfully verifying the received identity information by using the received public client key and the identity signature, thereby implementing the real-name registration of the target account address of the object on the first client in the cloud.

After performing real-name registration of the target account address, the cloud device may further generate a signature (which may be referred to as an address signature) for the registered target account address. The address signature may be obtained by the cloud device by signing the stored target account address by using a private key of the cloud device. The address signature may be encrypted by using a public key of the cloud device. The address signature is configured for indicating that the cloud device has successfully registered the target account address. The cloud device may return the address signature to the first client.

The process in which the cloud device signs the target account address by using the private key of the cloud device to obtain the address signature may include: The cloud device may calculate a hash value of the target account address, and then the cloud device may use the private key of the cloud device to encrypt the hash value of the target account address, to obtain the address signature of the target account address.

In all embodiments of the present disclosure, the foregoing process in which the cloud device generates the address signature of the target account address and returns the address signature to the first client may be replaced by an issuance process of a CA (which is a certificate issuing authority) certificate, as long as it can be proven that the target account address has actually been validly registered. This may be specifically determined according to a specific scenario, and is not limited herein.

The cloud device may be a backend device of the first client. If the first client is built based on a blockchain network, the cloud device may be a node device of a blockchain node in the blockchain network, and the node device may be formed by one or more computer devices. The computer device may be a server or another device.

Operation S205: Receive an address signature returned by the cloud device, where the address signature is obtained by the cloud device by signing the stored target account address by using a private key of the cloud device, and the address signature is configured for indicating successful registration of the target account address.

Specifically, the first client may receive the address signature returned by the cloud device, and the first client may store the address signature. The address signature may be used in the first client as a certificate or a record that the target account address has been registered in the cloud.

Through the foregoing process, the process of registering the target account address in the cloud is completed. The target account address is registered, so that the real-name registration of the object is also implemented. This can improve security and validity of using the first client by the object.

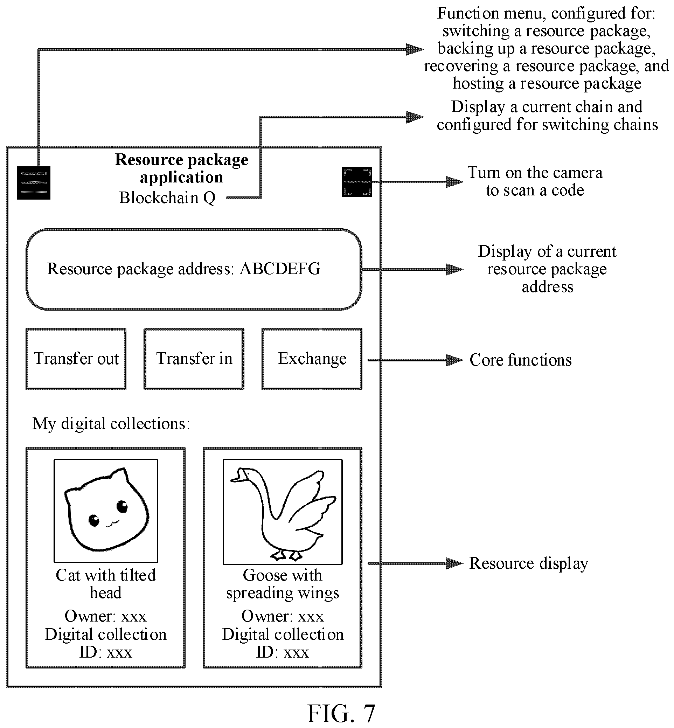

FIG. 7 is a schematic diagram of an interface of a client according to the present disclosure. The first client in the present disclosure may be a resource package application in FIG. 7. The resource package application may be built based on a blockchain network (for example, a blockchain Q). The resource package application may be an application used by an object to manage resources on the blockchain. The resource may be any digital resource such as a data collection.

The client interface shown in FIG. 7 is an interface of the resource package application. The interface displays a resource package address (namely, an account address "ABCDEF" of the object), and further displays the blockchain Q to which the current resource package application belongs. The blockchain Q supports being switched (for example, switched to another blockchain to which the resource package application belongs).

The interface further displays a function menu. Through the function menu, functions such as switching resource packages (for example, switching resource package addresses), backing up resource packages (for example, backing up encrypted data in a local storage space), recovering resource packages (for example, recovering encrypted data in the resource package application by using encrypted data backed up locally or in the cloud), and hosting resource packages (for example, hosting encrypted data in the cloud device) can be implemented.

The interface further displays a code scanning control. Through the code scanning control, a camera of an object terminal may be opened for code scanning, to perform corresponding service processing (for example, obtaining data submitted by another client or initiating a transaction).

The interface further displays digital resources (digital collections) under the account address of the object, including "Cat with tilted head" and "Goose with spreading wings", and further displays owners of the digital resources and digital resource IDs (identifiers).

The interface further displays core functions, including a "transfer out" function, a "transfer in" function, and an "exchange" function. The "transfer out" function is used by the object to transfer a possessed digital collection to another object, the "transfer in" function is used by the object to receive a digital collection transferred from another object, and the "exchange" function is used by the object to exchange a possessed digital collection for another item (for example, another digital collection).

FIG. 8 is a schematic flowchart of a data recovery method according to the present disclosure. In all embodiments of the present disclosure, an execution entity may also be the foregoing first client in the terminal device. This embodiment of the present disclosure mainly describes that when encrypted data in the first client is lost (which may be understood as the loss of the private client key), how to recover the encrypted data from the cloud device. Such a recovery method requires that the object has backed up (that is, hosted) the encrypted data (which may be understood as the private client key) on the cloud device. As shown in FIG. 8, the method includes the following operations.

Operation S301: Obtain the identity information if the encrypted data stored in the first client is lost and a cloud-based encrypted data recovery request is obtained.

Specifically, if the encrypted data stored in the first client is lost, the object may initiate, in the first client, a request for recovering encrypted data from the cloud (which may be referred to as a cloud-based encrypted data recovery request, where for example, the request may be initiated by the object through a control configured for recovering encrypted data from the cloud in the first client, and carries an identifier of the control configured for recovering encrypted data and an identifier of the first client).

Therefore, if the encrypted data stored in the first client is lost, and the first client obtains the foregoing encrypted data recovery request of the object, the first client may request the object to enter his/her identity information. The identity information may be the identity information used by the object during the registration of the foregoing target account address. Therefore, the first client can obtain the identity information entered by the object.

In all embodiments of the present disclosure, if the terminal device of the object where the first client is located is lost or damaged, the encrypted data of the object in the first client may be lost. In all embodiments of the present disclosure, if the terminal device of the object where the first client is originally located is lost or damaged, the first client that performs encrypted data recovery in this embodiment of the present disclosure may exist in another terminal device of the object. To be specific, when the original terminal device of the object is lost, the object may reinstall the first client in another terminal device, and recover the encrypted data of the object in the reinstalled first client.

Operation S302: Transmit the identity information to the cloud device, so that the cloud device obtains at least one account address associatively stored with the identity information after successfully verifying the identity information.

Specifically, the first client may send the obtained identity information of the object to the cloud device, so that the cloud device can obtain at least one account address associatively stored with the identity information of the object after successfully verifying the identity information of the object. The at least one account address may include all account addresses of the object on the first client (which may also be referred to as account addresses of the first client of the object), and the at least one account address may include the foregoing target account address. The cloud device may return the obtained at least one account address to the first client.

The at least one account address may each be associatively stored with the identity information of the object in the cloud device after the address is registered in the cloud device based on the principle described in the embodiment corresponding to FIG. 5.

The cloud device may perform verification on the identity information of the object with the authoritative institution (namely, a third-party institution) to which the identity information of the object belongs, for example, perform verification on whether the identity information of the object is identity information officially released by the authoritative institution. If it is verified that the identity information of the object is identity information officially released by the authoritative institution, it indicates that the verification on the identity information of the object succeeds.

Operation S303: Receive the at least one account address associatively stored with the identity information from the cloud device, and select, from the at least one account address received, the target account address that needs to be recovered.

Specifically, the first client may receive the at least one account address associatively stored with the identity information of the object from the cloud device, and may output the at least one account address for the object to select. The object may select, from the at least one account address outputted, the target account address to which the encrypted data that needs to be recovered belongs. The first client may alternatively select, from the at least one account address according to a selection operation of the object on the target account address in the at least one account address outputted, the target account address that needs to be recovered.

Operation S304: Transmit the target account address to the cloud device, so that the cloud device obtains the encrypted data associatively stored with the target account address.

Specifically, the first client may return the target account address that needs to be recovered to the cloud device, so that the cloud device can obtain the encrypted data associatively stored with the target account address (the encrypted data associatively backed up with the target account address). The cloud device may return the obtained encrypted data associatively stored with the target account address to the first client. The encrypted data is backed up and stored by the cloud device according to the foregoing description in the embodiment corresponding to FIG. 3.

Operation S305: Receive the encrypted data returned by the cloud device, and recover the encrypted data based on the received encrypted data and the target account address.

Specifically, the first client may receive the encrypted data returned by the cloud device, and may recover the encrypted data on the first client by using the received encrypted data and the target account address selected by the object, as described below.

The first client may request the object to enter a password. Therefore, the first client may receive the object password entered by the object. The first client may decrypt the received encrypted data based on the object password entered by the object to obtain the private client key of the object on the first client. For example, the first client may calculate a corresponding symmetric key according to the object password entered by the object, and use the symmetric key to decrypt the received encrypted data to obtain the private client key of the object.

In all embodiments of the present disclosure, if there is a security environment callable by the first client in the terminal device of the object, the operation of the first client receiving the object password entered by the object and the operation of the first client decrypting the received encrypted data according to the object password entered by the object to obtain the private client key may both be performed by the first client by calling the security environment.

Further, the first client may calculate the corresponding public client key based on the private client key obtained through the decryption, and may calculate the account address of the object on the first client according to the calculated public client key. If the calculated account address is the same as the foregoing selected target account address, the first client may associatively store the target account address and the received encrypted data.

Through the foregoing process, the encrypted data can be recovered on the first client through the backup on the cloud device.

According to the method provided in this embodiment of the present disclosure, when the encrypted data in the first client is lost, the encrypted data can be recovered on the first client by using the encrypted data backed up in the cloud device. In addition, in this process, the private client key of the object is not exposed to the first client or the cloud device, and is kept confidential.

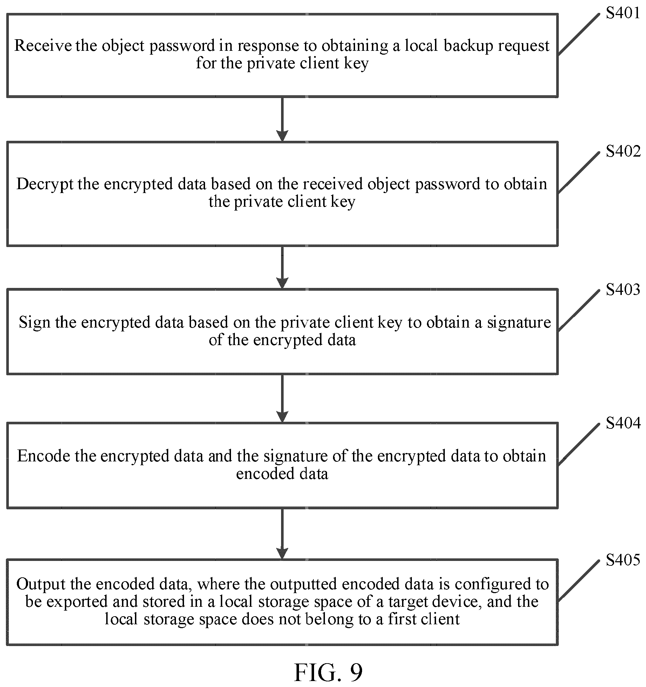

FIG. 9 is a schematic flowchart of a data backup method according to the present disclosure. In all embodiments of the present disclosure, an execution entity may also be the foregoing first client in the terminal device. This embodiment of the present disclosure describes a process of locally backing up encrypted data. As shown in FIG. 9, the method includes the following operations.

Operation S401: Receive the object password in response to obtaining a local backup request for the private client key.

Specifically, if the first client obtains the local backup request (which, for example, may be initiated by the object through a control configured for local backup of encrypted data in the first client, and carries an identifier of the control configured for local backup and an identifier of the first client) for the encrypted data (which may be understood as a request for the private client key from the perspective of the object), the first client may request the object to enter the password, and the first client may receive the object password entered by the object.

In all embodiments of the present disclosure, if the terminal device of the object includes a security environment callable by the first client, the operation of the first client receiving the object password entered by the object may be performed by the first client by calling the security environment.

Operation S402: Decrypt the encrypted data based on the received object password to obtain the private client key.

Specifically, the first client may use the received object password to decrypt the encrypted data to obtain the private client key of the object on the first client. For example, the first client may calculate a corresponding symmetric key by using the object password entered by the object, and then use the symmetric key to decrypt the encrypted data to obtain the private client key of the object.

In all embodiments of the present disclosure, if the terminal device of the object includes a security environment callable by the first client, the operation of the first client using the object password entered by the object to decrypt the encrypted data to obtain the private client key may be performed by the first client by calling the security environment.

Operation S403: Sign the encrypted data based on the private client key to obtain a signature of the encrypted data.

Specifically, the first client may use the private client key obtained through the decryption to sign the encrypted data to obtain the signature of the encrypted data. If the terminal device of the object includes the security environment, the operation of the first client signing the encrypted data by using the private client key obtained through the decryption to obtain the signature of the encrypted data may alternatively be performed by the first client by calling the security environment. After the security environment is called to obtain the signature of the encrypted data, the signature of the encrypted data may be provided to the first client. Therefore, the signature of the encrypted data obtained by the first client may be obtained based on the security environment.

In all embodiments of the present disclosure, the process of signing the encrypted data by using the private client key to obtain the signature of the encrypted data may include: performing hash calculation on the encrypted data to obtain a hash value of the encrypted data, and encrypting the hash value of the encrypted data by using the private client key to obtain the signature of the encrypted data.

Operation S404: Encode the encrypted data and the signature of the encrypted data to obtain encoded data.

Specifically, the first client may encode the encrypted data and the signature of the encrypted data to obtain the encoded data. The encoding may be performed in any mode, and this may be specifically determined according to a specific scenario, so that the encoded data obtained through the encoding can be visually displayed and provided to the object. Subsequently, the encoded data may be decoded to obtain the encrypted data and the signature of the encrypted data.

For example, a mode for encoding the encrypted data and the signature of the encrypted data may be video coding, image coding, audio coding, character coding (for example, hex (a character coding mode), base64 (a character coding mode), or base58 (a character coding mode)), or any other coding modes. If video coding is used, encoded data obtained may be data in the form of a video; if image coding is used, encoded data obtained may be data in the form of an image; and if audio coding is used, encoded data obtained may be data in the form of audio.

In all embodiments of the present disclosure, when the encrypted data and the signature of the encrypted data are encoded, the target account address (where the target account address may be pre-stored by the first client, or may be calculated by the first client by using the private client key obtained through the decryption) may also be encoded together. In other words, the encrypted data, the signature of the encrypted data, and the target account address may alternatively be encoded together (for example, spliced and then encoded) to obtain the foregoing encoded data.

Operation S405: Output the encoded data, where the outputted encoded data is configured to be exported and stored in a local storage space of the target device, and the local storage space does not belong to the first client.

Specifically, the first client may output the encoded data, and the outputted encoded data may be configured to be exported by the object and stored in the local storage space of the target device (namely, the terminal device of the object, or referred to as an object device). The local storage space does not belong to the first client. For example, the client interface of the encoded data outputted on the first client may further include a control for exporting the encoded data. The object may save the encoded data in the local storage space of the terminal device of the object through the control.

For example, if the encoded data is in the form of an image, the local storage space may be a storage space of a photo album in the target device. In other words, the encoded data may be exported and stored in the photo album of the target device.

Through the foregoing process, local backup of the encrypted data (namely, encryption and backup of the private client key) is implemented. The encrypted data is compressed into a data form (for example, a video, audio, or an image) that the object can intuitively perceive, so that the threshold for the object to keep the encrypted data can also be lowered.

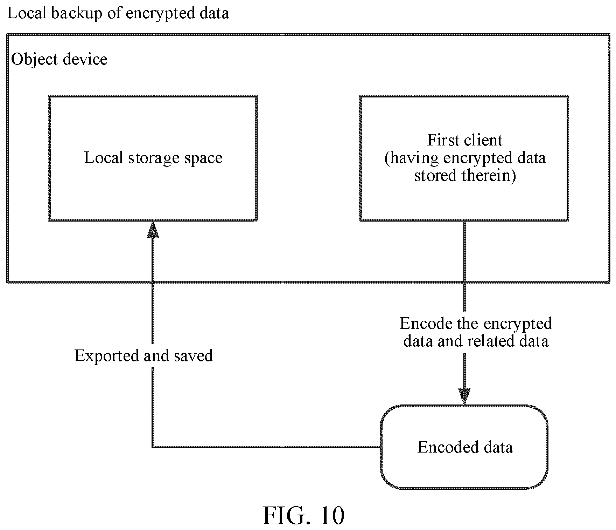

FIG. 10 is a schematic diagram of a scenario of local backup of data according to the present disclosure. As shown in FIG. 10, a target device may include a local storage space and a first client (having encrypted data stored therein). An object may request, in the first client, to back up the encrypted data to the local device. Therefore, the first client may encode the encrypted data and related data (for example, a signature of the encrypted data and a target account address) together to obtain encoded data, and the encoded data is provided to the object and then exported and saved in the local storage space.

Further, if the encrypted data stored in the first client is lost and a local-based encrypted data recovery request of the object is obtained, the first client may request the object to import the encoded data (where for example, a control for importing data may be displayed, and the object may import the encoded data based on the control). Therefore, the first client may obtain the encoded data imported by the object from the local storage space (where if the object transfers the encoded data, the encoded data may alternatively not be imported from the local storage space, and is imported from a storage location after transferring).

The first client may decode the encoded data, to obtain the encrypted data and the signature of the encrypted data, or further obtain the target account address. In all embodiments of the present disclosure, if the target account address has been registered in the cloud, and the first client stores the address signature of the target account address, the stored address signature may be used to verify that the target account address obtained through the decoding has been registered.

Further, the first client may request the object to enter the password, and the first client may receive the object password entered by the object. The first client may further use the object password entered by the object to decrypt the encrypted data obtained through the decoding to obtain the private client key of the object on the first client. For example, the first client may first calculate a corresponding symmetric key through the object password entered by the object, and then use the symmetric key to decrypt the encrypted data obtained through the decoding to obtain the private client key.

In all embodiments of the present disclosure, if there is a security environment callable by the first client in the terminal device of the object, the operation of the first client receiving the object password entered by the object and the operation of the first client using the object password entered by the object to decrypt the encrypted data obtained through the decoding may both be performed by the first client by calling the security environment.

The first client may use the private client key obtained through the decryption to calculate the public client key of the object, and may calculate the account address (namely, the foregoing target account address) of the object on the first client by using the calculated public client key.

If the terminal device of the object has a security environment callable by the first client, the operation of the first client using the private client key obtained through the decryption to calculate the public client key of the object may be performed by the first client by calling the security environment. In other words, the calculated public client key may be provided by the security environment to the first client.

Based on the calculated public client key and the signature of the encrypted data obtained through the decoding, verification may be further performed on the encrypted data obtained through the decoding. This can ensure validity and credibility of the encrypted data obtained through the decoding. For example, the first client may use the calculated public client key to decrypt the signature of the encrypted data obtained through the decoding to obtain a hash value. The first client may further perform hash calculation on the encrypted data obtained through the decoding to obtain another hash value. If the two hash values are the same, it indicates that the verification on the encrypted data obtained through the decoding succeeds.

The first client may associatively store the calculated target account address and the encrypted data obtained through the decoding, thereby recovering the encrypted data on the first client.

According to the method provided in this embodiment of the present disclosure, the private client key can be encrypted and backed up locally, and subsequently, the encrypted data in the first client can be recovered by using the encrypted and backed up private client key (for example, encoded data, which may also be understood as encrypted data). In this process, the private client key of the object is not exposed and is kept confidential.

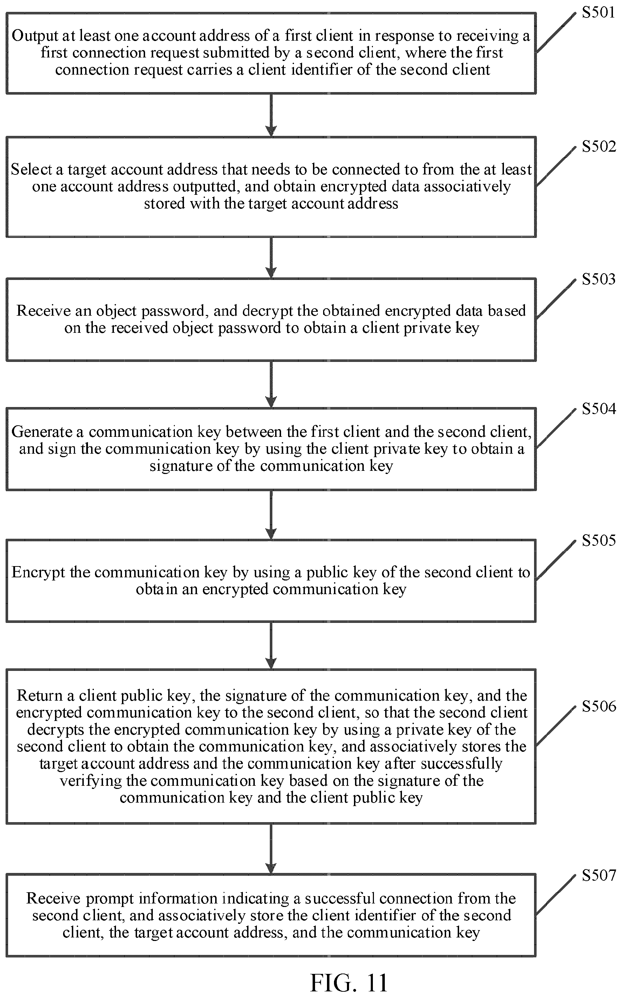

FIG. 11 is a schematic flowchart of a client connection method according to the present disclosure. In all embodiments of the present disclosure, an execution entity may also be the foregoing first client included in the terminal device. As shown in FIG. 11, the method includes the following operations.

Operation S501: Output at least one account address of the first client in response to receiving a first connection request submitted by a second client, where the first connection request carries a client identifier of the second client.

Specifically, the second client may be a client different from the first client. The second client may be a client in any form such as a web client, an applet client, or an APP client. In all embodiments of the present disclosure, the second client may be a Web3 (which is a type of Internet) application.

The object may request to connect to the first client in the second client (which, for example, may be initiated through a control that is in the second client and configured for connecting to the first client). The second client may generate the first connection request. The first connection request is a request of the second client for connecting to the first client. The second client may submit the first connection request to the first client. The first connection request may carry client information (which may include the client identifier of the second client and a public key of the second client) of the second client and a signature of the second client on the client information. The signature of the client information is obtained by the second client by encrypting a hash value of the client information by using a private key of the second client.

After receiving the first connection request initiated by the second client, the first client may extract the client information of the second client and the signature of the client information according to the first connection request. Further, the first client may use the public key of the second client in the client information to perform verification on the signature of the client information. After the verification succeeds, it indicates that the client information is indeed sent by the second client.

For example, the first client may calculate the hash value of the extracted client information of the second client, and may use the public key of the second client in the extracted client information to decrypt the signature of the extracted client information, to obtain a to-be-verified hash value. If the calculated hash value is the same as the to-be-verified hash value, it indicates that the verification on the signature of the client information succeeds, indicating that the client information is trusted.

In all embodiments of the present disclosure, if the second client is a Web3 (which is a type of Internet) application, the client identifier of the second client may be domain name information of the second client.

After successfully verifying the obtained client information of the second client, the first client may query at least one account address (which may also be referred to as at least one account address of the first client) of the object on the first client. The at least one account address includes all account addresses of the object on the first client, and the at least one account address may include the foregoing target account address.

The first client may output the at least one account address queried.

Operation S502: Select the target account address that needs to be connected to from the at least one account address outputted, and obtain the encrypted data associatively stored with the target account address.

Specifically, the object may select the target account address (where any account address may be selected) from the at least one account address outputted by the first client for connection, and the first client may select, from the at least one account address according to a selection operation of the object on the target account address, the target account address that needs to be connected to.

The target account address of the object on the first client is associatively stored with the encrypted data, and the target account address is calculated by using the public client key of the object. Therefore, the first client may further obtain the encrypted data associatively stored with the selected target account address.

Operation S503: Receive the object password, and decrypt the obtained encrypted data based on the received object password to obtain the private client key.

Specifically, the first client may request the object to enter the password, the first client may receive the object password entered by the object, and the first client may use the received object password to decrypt the obtained encrypted data to obtain the private client key of the object.

In all embodiments of the present disclosure, if there is a security environment callable by the first client in the terminal device of the object, the operation of the first client receiving the object password entered by the object and the operation of decrypting the obtained encrypted data by using the object password entered by the object to obtain the private client key may both be performed by the first client by calling the security environment.

Operation S504: Generate a communication key between the first client and the second client, and sign the communication key by using the private client key to obtain a signature of the communication key.

Specifically, the first client may generate the communication key (which may also be referred to as a session key) between the first client the second client. The first client may generate a communication key between the first client and the second client by using a key symmetric algorithm. Subsequently, communication between the first client and the second client can be carried out by using the communication key, to prevent communication content from being leaked.

The process in which the first client generates the communication key between the first client and the second client may include: The communication key herein is a symmetric encryption key. Because a symmetric encryption algorithm is used, there is no concept of public and private keys, and there is only one key. Therefore, during generation, the terminal device first locally generates a random number whose randomness meets requirements of a cryptographic algorithm, and then generates the foregoing communication key according to the random number according to a calculation process of the asymmetric encryption algorithm.

The first client may use the private client key obtained through the decryption to sign the communication key to obtain the signature of the communication key. The process may include: The first client may calculate a hash value of the communication key. Further, the first client may use the private client key obtained through the decryption to encrypt the hash value of the communication key to obtain the signature of the communication key.

Operation S505: Encrypt the communication key by using a public key of the second client to obtain an encrypted communication key.

Specifically, the first client may use the public key of the second client to encrypt the communication key obtain the encrypted communication key, where the encrypted communication key may be decrypted by using the private key of the second client.

Operation S506: Return the public client key, the signature of the communication key, and the encrypted communication key to the second client, so that the second client decrypts the encrypted communication key by using a private key of the second client to obtain the communication key, and associatively stores the target account address and the communication key after successfully verifying the communication key based on the signature of the communication key and the public client key.

Specifically, the first client may return the public client key (which may be calculated by using the public client key obtained through the decryption, or may be pre-stored by the first client) of the object, the signature of the communication key, and the encrypted communication key to the second client.

After receiving the public client key, the signature of the communication key, and the encrypted communication key that are returned by the first client, the second client may use the private key of the second client to decrypt the encrypted communication key to obtain the communication key.

Further, the second client may perform verification, based on the signature of the communication key and the public client key received, on the communication key obtained through the decryption. After the verification succeeds, the target account address (where the target account address may be calculated by the second client by using the received public client key, or may be directly returned by the first client) and the communication key may be associatively stored. In this case, the second client has connected to the first client.

The process in which the second client performs verification, based on the signature of the communication key and the public client key received, on the communication key obtained through the decryption may include: The second client may use the public client key to decrypt the signature of the communication key to obtain a hash value. The second client may further perform hash calculation on the communication key obtained through the decryption to obtain a hash value. If the hash value obtained through the decryption is the same as the calculated hash value, it indicates that the verification on the communication key obtained through the decryption succeeds, indicating that the communication key obtained through the decryption is trusted.

After associatively storing the target account address and the communication key, the second client may further return, to the first client, prompt information indicating a successful connection to the target account address.

Operation S507: Receive prompt information indicating a successful connection from the second client, and associatively store the client identifier of the second client, the target account address, and the communication key.

Specifically, the first client may receive the prompt information indicating the successful connection to the target account address that is returned by the second client. After receiving the prompt information, the first client may further associatively store the client identifier of the second client, the target account address, and the communication key between the first client and the second client.

Through the foregoing process, the account address (namely, the account of the object) of the object in the first client follows the object. In other words, the object can connect his/her account address in the first client on another client (for example, the second client).

If the second client is a Web3 application, the second client does not have an account system, and the second client may serve as a platform to connect to the account address of the object on the first client. Subsequently, the object may perform a corresponding operation (for example, performing a related operation on a digital resource under the connected account address) on the connected account address in the second client.

Through the foregoing process, the first client can connect to the second client, or in other words, the second client can connect to the first client. For example, if the first client is a resource package application, the object has a digital resource under the account address, and the second client may be a platform for resource sales (transfer), the object may initiate, in the second client, related operations of querying, displaying, and selling (namely, transferring) the digital resource under the connected account address (for example, the target account address) of the object.

Moreover, after the first client associatively stores the target account address, the client identifier of the second client, and the communication key between the first client and the second client, within a period of time (which may be referred to as a validity period) after the second client connects to the first client, the second client can directly connect to the first client without connection authorization (for example, without the need to perform authorization operations such as entering the object password by the object, and signing the communication key subsequently by using the private client key obtained by decrypting the encrypted data based on the object password entered by the object), as described in the following content.

If the second client connects to the first client and then disconnects from the first client within the foregoing validity period, the object may initiate, in the second client, a second connection request for connecting to the first client, and the second client may submit the second connection request to the first client. Similarly, the second connection request may carry the client information (which may include the client identifier and the public key of the second client) of the second client and the signature on the client information that is obtained by the second client by using the private key of the second client.

The first client may extract the client information of the second client and the signature of the client information from the second connection request. After the first client successfully verifies the signature of the second client to indicate that the extracted client information is trusted, the first client may query at least one account address of the object on the first client. The at least one account address may include all account addresses of the object on the first client, and the at least one account address may include the foregoing target account address.

The first client may output the queried at least one account address for the object to select, and the first client may determine, according to a selection operation of the object on the target account address in the at least one account address outputted, the target account address that needs to be connected to.

If the first client detects that the foregoing communication key associatively stored with the target account address and the client identifier of the second client exists, it indicates that the second client has recently connected to the target account address of the first client (where in this case, an authorization-free connection can be directly established). Therefore, the first client may use the public key of the second client to encrypt the stored communication key to obtain the encrypted communication key.

Further, the first client may return the encrypted communication key and the target account address to the second client (where alternatively, the public client key instead of the target account address may be returned, and the second client may calculate the target account address according to the received public client key). After receiving the encrypted communication key and the target account address, the second client may use the private key of the second client to decrypt the encrypted communication key to obtain the communication key.

Moreover, if the second client detects that the communication key associatively stored with the target account address exists, the second client may directly connect to the first client (for example, re-record time of connection to the target account address of the first client at a current moment, and continuously associatively store the target account address and the communication key), and may generate prompt information indicating a successful connection to the first client. The second client may return, to the first client, the prompt information indicating the successful connection.

The first client may receive the prompt information indicating the successful connection from the second client. The first client may further continuously associatively store the target account address, the client identifier of the second client, and the communication key between the first client and the second client, and may re-record time of connection to the second client at the current moment.

Through the foregoing process, the authorization-free connection between the first client and the second client is implemented.

Moreover, if the first client is a resource package application (namely, a resource package client), the second client may further perform verification on whether the object has ownership of a digital resource under the connected target account address, as described in the following content.

The second client may generate a first resource query request when needing to query whether the object has ownership of a digital resource under the account address (which for example, may be actively initiated in the second client by the object, or when the object expects to display his/her digital resource in a specific functional module (for example, a sales functional module) in the second client and the functional module can only display a digital resource to which the object has ownership, or when the second client needs to determine whether the object has a specific digital resource under the account address). The first resource query request is configured for initiating verification on whether the object has the ownership to the digital resource under the account address. The first resource query request carries a random number generated by the second client. The second client may submit the first resource query request to the first client.

If receiving the first resource query request initiated by the second client, the first client may query at least one account address of the object on the first client. The at least one account address may include all account addresses of the object on the first client, and the at least one account address may include the foregoing target account address.

The first client may output the at least one account address for the object to select, and the object may select the target account address from the at least one account address outputted. The first client may select, from the at least one account address according to a selection operation of the object on the target account address in the at least one account address, the target account address that needs to be queried.

The first client may then request the object to enter the password, the first client may receive the object password entered by the object, and the first client may use the object password entered by the object to decrypt the stored encrypted data to obtain the private client key of the object on the client.

Moreover, the first client may further use the private client key obtained through the decryption to sign the random number carried in the first resource query request (where for example, the private client key is used to encrypt a hash value of the random number), to obtain a random number signature.

**In** all embodiments of the present disclosure, if there is a security environment callable by the first client in the terminal device of the object, the foregoing operations of receiving the object password entered by the object, decrypting the encrypted data by using the object password entered by the object to obtain the private client key, and using the private client key to sign the random number may all be performed by the first client by calling the security environment.

The first client may return the random number signature and the public client key (which may be calculated by using the private client key obtained through the decryption, or pre-stored by the first client) of the object on the first client to the second client.

After receiving the random number signature and the public client key, the second client may perform verification on the random number signature by using the public client key, and after the verification succeeds, may initiate a second resource query request to the first client by using the public client key. The second resource query request is a final query request initiated after the second client determines that the second client is authorized by the first client and determines that the digital resource under the target account address belongs to the object (in other words, the object has ownership to the digital resource under the target account address).

The process in which the second client performs verification on the random number signature may include: The second client may use the received public client key to decrypt the random number signature to obtain a hash value. The second client may further calculate a hash value of the random number (namely, the random number carried in the first resource query request) previously generated by the second client. If the hash value obtained through the decryption is the same as the calculated hash value, it indicates that the verification on the random number signature succeeds.

The second client may submit the second resource query request to the first client, where the second resource query request may carry the public client key of the object on the second client. When receiving the second resource query request submitted by the second client, the first client may calculate the foregoing target account address according to the public client key in the second resource query request, and may query a resource of the object under the target account address and generate a corresponding query result.

In all embodiments of the present disclosure, if the first client is a resource package application built based on a blockchain network, the object has a plurality of account addresses in the first client, and digital resources under each account address are scattered in different blockchain networks, the first resource query request may further carry an identifier (for example, a chain ID) of a blockchain network in which a digital resource that the object expects to query is located. In this case, when the client identifier carried in the first resource query request is signed, the chain ID may also be signed. The chain ID may be provided by the object in the second client, so that the first client may further query the corresponding digital resource of the object in the corresponding blockchain network according to the chain ID and the target account address.

Further, the first client may return the query result for the resource of the object under the target account address to the second client. The query result corresponds to the actual query requirement of the first resource query request. For example, if the first resource query request is to query all digital resources of the object under the account address, the query result may include all digital resources of the object under the target account address. In another example, if the first resource query request is to query whether the object has a specific digital resource under the account address, the query result may be configured for indicating that the object has the specific digital resource or does not have the specific digital resource under the target account address. In still another example, if the first resource query request is to query whether the object has a specified quantity of digital resources under the account address, the query result may be configured for indicating that the object has the specified quantity of digital resources or does not have the specified quantity of digital resources under the target account address. The query result may be determined according to an actual query requirement, and is not limited herein.

In addition, data exchange between the first client and the second client may be performed in the following manners.

If the second client is a web client (for example, a Web3 application) and the first client is implemented in the form of a browser plug-in, the second client may pull up a browser plug-in (for example, the first client) through a built-in interface of a browser, and submits corresponding data (which may be any data that the second client needs to submit to the first client) to the first client.

If the second client is a web client (for example, a Web3 application) and the first client is an APP in the object terminal, the second client may generate graphic data (for example, a two-dimensional code or a barcode, where the graphic data may be displayed to the object for use) according to the corresponding data that needs to be submitted to the first client. The first client then scans the graphic data through a camera (where for example, the object may use the first client to scan the graphic data), so that the first client can obtain the corresponding data submitted by the second client.

If the second client is an APP and the first client is also an APP, the second client may generate graphic data according to the corresponding data that needs to be submitted to the first client. The first client then scans the graphic data through a camera, to obtain the corresponding data submitted by the second client (where in this case, the second client and the first client may not be in the same terminal device, and for example, the second client may be in a computer (PC) of the object, and the first client may be in a mobile phone of the object). Alternatively, if the second client and the first client exist in the same terminal device, the second client may alternatively pull up the first client in the terminal device (which may be understood as calling or triggering the first client), and submit the corresponding data directly to the first client that is pulled up.

Similarly, if the first client is a web client and the second client is implemented in the form of a browser plug-in, the first client may pull up a browser plug-in (for example, the second client) through a built-in interface of a browser, and submits corresponding data (which may be any data that the first client needs to submit or return to the second client) to the second client.

If the first client is a web client and the second client is an APP in the object terminal, the first client may generate graphic data (for example, a two-dimensional code or a barcode, where the graphic data may be displayed to the object for use) according to the corresponding data that needs to be submitted to the second client. The second client then scans the graphic data through a camera (where for example, the object may use the second client to scan the graphic data), to obtain the corresponding data submitted by the first client.

If the first client is an APP and the second client is also an APP, the first client may generate graphic data according to the corresponding data that needs to be submitted to the second client. The second client then scans the graphic data through a camera, to obtain the corresponding data submitted by the first client (where in this case, the second client and the first client may not be in the same terminal device, and for example, the first client may be in a computer (PC) of the object, and the second client may be in a mobile phone of the object). Alternatively, if the second client and the first client exist in the same terminal device, the first client may alternatively pull up the second client in the terminal device (which may be understood as calling or triggering the second client), and submit the corresponding data directly to the second client that is pulled up.

In all embodiments of the present disclosure, if the first client is a resource package application built based on a blockchain network, digital resources possessed by the object under the account address of the object can be queried by any person without authorization. It is only for verification. Authorization verification is only required when performing verification on whether the object has ownership to a digital resource under a specific account address.

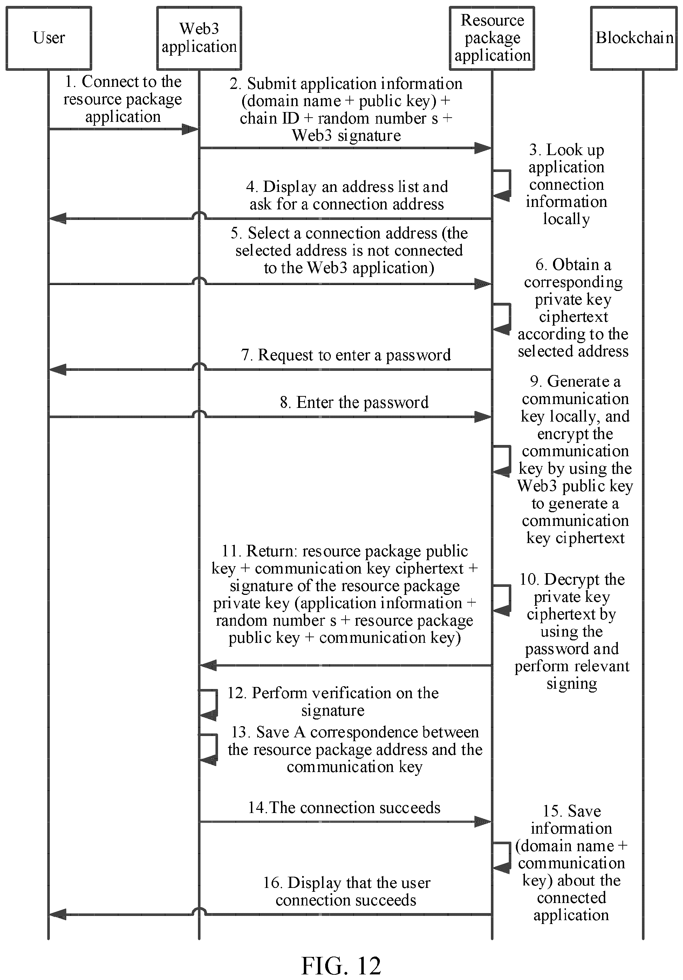

FIG. 12 is a schematic flowchart of a client connection according to the present disclosure. As shown in FIG. 12, the process may include the following operations.
1. A user (which may refer to an object) may request to connect to a resource package application (which may refer to a first client) in a Web3 application (which may refer to a second client). 2. The Web3 application may submit application information, a chain ID, a random number s, and a signature of the Web3 application to the resource package application. The data submitted herein may be carried in the foregoing first connection request. The application information may include a domain name (which may be understood as a client identifier) of the Web3 application and a public key of the Web3 application. The chain ID may be an ID of a blockchain to which an account address that the user expects to connect belongs. The random number s may be a value (configured for improving service security) randomly generated by the Web3 application. The signature of the Web3 application may be obtained by the Web3 application by signing all the data submitted using the public key of the Web3 application.
3. After verifying the signature of the Web3 application, the resource package application may look up application connection information locally. The application connection information may include account addresses of the object that the Web3 application can connect to, namely, account addresses in an address list herein. The account addresses in the address list may include all account addresses of the object in the resource package application. 4. The resource package application may display the address list and ask the user for an account address that needs to be connected to.
5. The user may select the account address that needs to be connected to (for example, the foregoing target account address) in the displayed address list. 6. If the account address selected by the user is an address that the Web3 application has not connected to recently, the resource package application may obtain a corresponding private key ciphertext (namely, encrypted data) according to the selected address.
7. The resource package application may request the object to enter a password. 8. The object enters the password. 9. The resource package application generates a communication key between the resource package application and the Web3 application, and may use the public key of the Web3 application to encrypt the communication key to obtain a communication key ciphertext (namely, the encrypted communication key).
10. The resource package application may use the password entered by the object to decrypt the private key ciphertext, and perform relevant signing by using a private key (namely, a private client key) obtained through the decryption to obtain a signature of the private client key. The signature may be obtained by the resource package application by signing the application information, the communication key, the random number s, and the public client key (which may be referred to as a resource package public key) of the Web3 application using the private client key (which may be referred to as a resource package private key) obtained through the decryption.
11. The resource package application may return the resource package public key, the communication key ciphertext, and the signature of the resource package private key to the Web3 application. 12. The Web3 application may perform verification (namely, signature verification) on the signature of the resource package private key. 13. After verifying the signature of the resource package private key, the Web3 application may save a correspondence between the resource package address (namely, the account address, such as the foregoing target account address) and the communication key, that is, associatively store the resource package address and the communication key. 13. The Web3 application returns, to the resource package application, prompt information indicating a successful connection. 14. The resource package application saves information about the connected application, including the domain name of the Web3 application and the communication key.

Subsequently, encrypted communication between the Web3 application and the resource package application can be carried out by using the communication key.

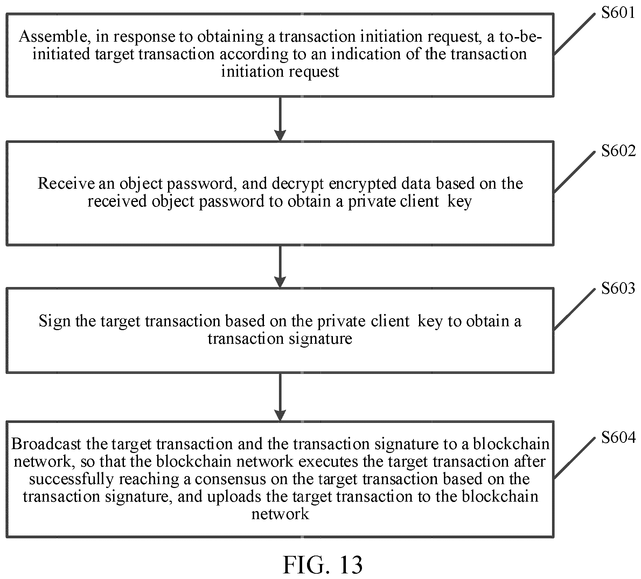

FIG. 13 is a schematic diagram of a scenario of a transaction method according to the present disclosure. In all embodiments of the present disclosure, an execution entity may also be the foregoing first client in the terminal device. In this embodiment of the present disclosure, the first client may be built based on a blockchain network, and the foregoing cloud device may be a node device of a blockchain node in the blockchain network. As shown in FIG. 13, the method includes the following operations.

Operation S601: Assemble, in response to obtaining a transaction initiation request, a to-be-initiated target transaction according to an indication of the transaction initiation request.

Specifically, if the first client obtains the transaction initiation request (which may be initiated by the object through a transaction initiation control in the first client), the first client may assemble a to-be-initiated transaction according to the indication of the transaction initiation request (where for example, the transaction initiation request may indicate the object to select a type of the to-be-initiated transaction), and the to-be-initiated transaction may be referred to as the target transaction.

For example, the first client may be a resource package application built based on the blockchain network. In this case, the target transaction may be a transaction of transferring a digital resource of the object under a target account address. In another example, the target transaction may alternatively be a transaction of executing a specific smart contract in the blockchain network. This may be specifically determined according to an actual application scenario, and is not limited herein.

Operation S602: Receive the object password, and decrypt the encrypted data based on the received object password to obtain the private client key.

Specifically, the first client may request the object to enter the password, and then the first client may receive the object password entered by the object.

The first client may obtain the stored encrypted data, and may use the received object password to decrypt the encrypted data to obtain the private client key of the object.

If the terminal device of the object includes a security environment callable by the first client, the operation of the first client receiving the object password entered by the object and the operation of using the object password to decrypt the encrypted data to obtain the private client key may both be performed by the first client by calling the security environment.

Operation S603: Sign the target transaction based on the private client key to obtain a transaction signature.

Specifically, the first client may use the foregoing private client key obtained through the decryption to sign the foregoing to-be-initiated target transaction, to obtain the signature of the target transaction, where the signature may be referred to as the transaction signature.

For example, the first client may calculate a hash value of the target transaction and encrypt the hash value of the target transaction by using the private client key to obtain the transaction signature.

Operation S604: Broadcast the target transaction and the transaction signature to the blockchain network, so that the blockchain network executes the target transaction after successfully reaching a consensus on the target transaction based on the transaction signature, and uploads the target transaction to the blockchain network.

Specifically, the first client may broadcast the target transaction and the transaction signature to the blockchain network. After obtaining the target transaction and the transaction signature, blockchain nodes in the blockchain network may perform verification on the transaction signature (which may also be understood as performing verification on the target transaction by using the transaction signature). After the verification succeeds, the blockchain nodes in the blockchain network may perform consensus on the target transaction, and may execute, after reaching a consensus, the target transaction and upload the target transaction to the blockchain network (where for example, the blockchain nodes may add the target transaction to respective ledgers).

The process in which the blockchain nodes perform verification on the transaction signature may include: The blockchain node may use the public client key (which may be calculated and sent by the first client according to the private client key obtained through the decryption, or may be pre-stored by the blockchain nodes) of the object to decrypt the received transaction signature, to obtain a hash value. The blockchain nodes may further perform hash calculation on the received target transaction to obtain a hash value. If the hash value obtained through the decryption is the same as the calculated hash value, it indicates that the verification on the transaction signature succeeds, and also indicates that the verification on the received target transaction succeeds.

Through the foregoing process, the target transaction is initiated and executed by using the object password entered by the object and the encrypted data stored in the first client. In this process, the private client key of the object is not exposed and is kept confidential.

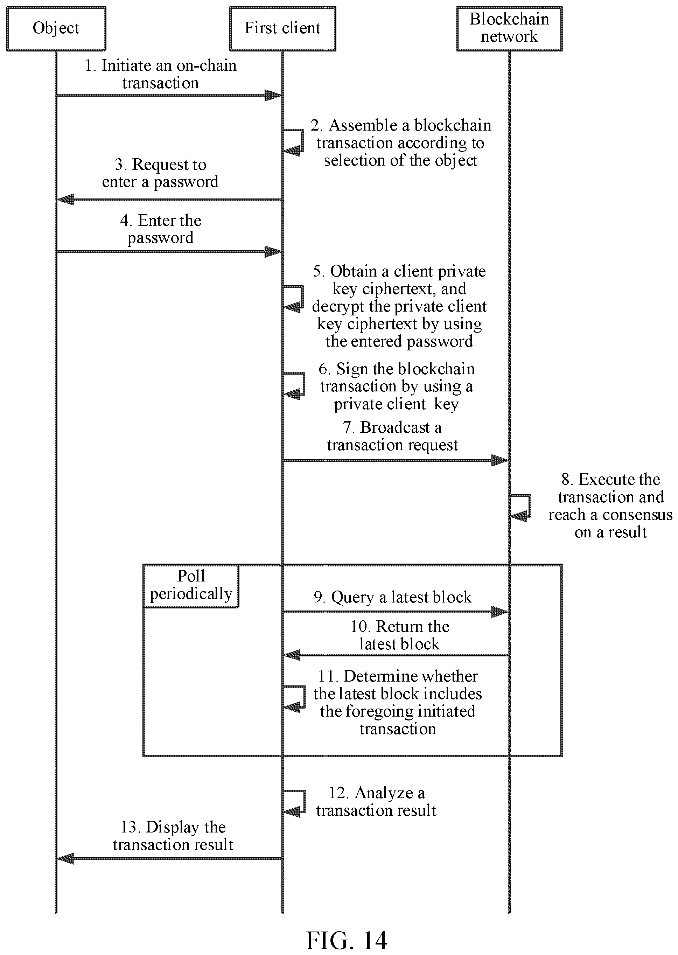

FIG. 14 is a schematic flowchart of transaction execution according to the present disclosure. A first client may be built based on a blockchain network. As shown in FIG. 14, the process may include the following operations.
1. An object may initiate an on-chain transaction on the first client. 2. The first client may assemble a corresponding blockchain transaction (for example, the foregoing target transaction) according to selection (for example, a selected transaction type) of the object. 3. The first client may request the object to enter a password. 4. The object may enter the password.
5. The first client may obtain a stored private client key ciphertext (namely, encrypted data), and use the password entered by the object to decrypt the private client key ciphertext to obtain a private client key. 6. The first client may use the private client key to sign the blockchain transaction, to obtain a signature of the blockchain transaction.
7. The first client may broadcast a transaction request to the blockchain network, where the transaction request may carry the blockchain transaction and the signature of the blockchain transaction. 8. The blockchain network (each blockchain node in the blockchain network) may execute the blockchain transaction based on the signature and broadcast a consensus result of the blockchain transaction to each other.
9. The first client may periodically poll the blockchain network, including querying a latest block on the blockchain network. 10. When receiving the query of the first client for the latest block, the blockchain node in the blockchain network may return the latest block to the first client.
11. The first client may determine whether the latest block includes the foregoing initiated blockchain transaction. 12. If the latest block includes the blockchain transaction, the first client may analyze a transaction result for the blockchain transaction. In fact, the first client may obtain the transaction result for the blockchain transaction on the blockchain network. 13. The first client may display the transaction result for the blockchain transaction to the object.

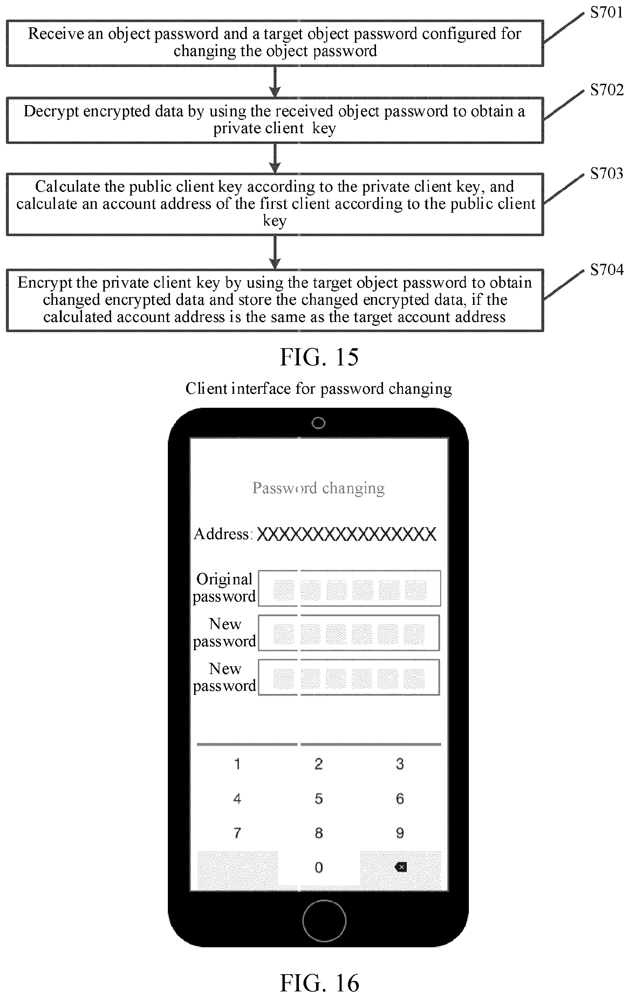

FIG. 15 is a schematic flowchart of a password changing method according to the present disclosure. In all embodiments of the present disclosure, an execution entity in this embodiment of the present disclosure may also be the foregoing first client included in the terminal device. As shown in FIG. 15, the method includes the following operations.

Operation S701: Receive, in response to obtaining a password change request for the target account address, the object password and a target object password configured for changing the object password.

Specifically, if the object expects to change the object password (where the target account address may be generated based on the private client key encrypted by using the object password) for the target account address, the object may initiate a request for changing the password (which may be initiated through, for example, a password change control in the first client) for the target account address in the first client, so that the first client can generate the password change request for the target account address.

The first client may output at least one account address (including the target account address) of the object on the first client, for the object to select the account address corresponding to the password that needs to be changed (where for example, the object may select the target account address from the at least one account address), and then the first client may generate the password change request for the account address selected by the object.

If obtaining the password change request, the first client may request the object to enter the object password (namely, the original object password) for the target account address and the target object password configured for changing the object password. The first client may receive the object password entered by the object for the target account address and the target object password configured for changing the object password.

In all embodiments of the present disclosure, if the terminal device of the object includes a security environment callable by the first client, the operation of the first client receiving the object password entered by the object and the target object password may be performed by the first client by calling the security environment.

Operation S702: Decrypt the encrypted data by using the received object password to obtain the private client key.

Specifically, the first client may use the object password (the original object password) entered by the object to decrypt the stored encrypted data, to obtain the private client key of the object on the first client.

For example, the first client may first calculate a corresponding symmetric key by using the object password entered by the object, and then use the symmetric key to decrypt the stored encrypted data to obtain the private client key of the object on the first client.

Operation S703: Calculate the public client key according to the private client key, and calculate an account address of the first client according to the public client key.

Specifically, the first client may use the private client key obtained through the decryption to calculate the corresponding public client key of the object on the first client, and may further calculate the account address of the object on the first client (which may also be referred to as calculating the account address of the first client) according to the calculated public client key.

Operation S704: Encrypt the private client key by using the target object password to obtain changed encrypted data and store the changed encrypted data, if the calculated account address is the same as the target account address.

Specifically, if the calculated account address is the same as the foregoing target account address corresponding to the password change request, the first client may use the target object password entered by the object to encrypt the private client key obtained through the decryption, to obtain the changed encrypted data.

The first client may store the changed encrypted data and overwrite the originally stored encrypted data, that is, delete the originally stored encrypted data, thereby changing the object password of the object.

Further, after storing the changed encrypted data, if the first client further detects that the original encrypted data (namely, the foregoing encrypted data) is cloud-hosted (namely, backed up on the cloud device), the first client may prompt and ask the object whether to update the encrypted data backed up in the cloud currently (for example, prompting and asking through a pop-up window).

In all embodiments of the present disclosure, in the foregoing process of hosting the encrypted data on the cloud device described in the embodiment corresponding to FIG. 3, the first client may retain a hosting mark locally (namely, in the storage space of the first client in the terminal device of the object) at the end of the cloud hosting process for the encrypted data. The hosting mark is configured for recording that the first client has completed cloud hosting of the encrypted data. The hosting mark may further be associatively stored with the target account address in the first client. Therefore, if the first client detects the hosting mark associatively stored with the target account address after storing the changed encrypted data, it may be determined that the encrypted data (namely, the foregoing original encrypted data) is cloud-hosted.

If the object currently needs to update the encrypted data backed up in the cloud, the first client may allow the object to re-host the changed encrypted data in the cloud device through the process described in the embodiment corresponding to FIG. 3. After hosting the changed encrypted data, the cloud device may further delete the originally backed up encrypted data (namely, use the changed encrypted data to overwrite the original backed up encrypted data).

In all embodiments of the present disclosure, if the object does not update the encrypted data backed up in the cloud, when the encrypted data of the object in the first client is lost and the encrypted data in the first client is recovered (where the recovered encrypted data is the unchanged encrypted data) by using the encrypted data obtained from the cloud device, the object needs to use the original object password (namely, the original object password) in the first client to continue to use service processing associated with the target account address in the first client.

In all embodiments of the present disclosure, in the password change process, the object enters the original object password until the first client uses the target object password to encrypt the encrypted data. After obtaining the changed encrypted data, the first client may further ask the object to perform verification on the changed target object password, including: The first client may ask the target object to enter the target object password again. After entering, the first client uses the entered target object password to decrypt the changed encrypted data, to obtain the private client key, and calculates the corresponding account address by using the private client key. If the account address is the same as the foregoing selected target account address, it indicates that the verification on the new password (namely, the target object password) of the object succeeds, and the changed encrypted data may be stored in this case.

FIG. 16 is a schematic diagram of an interface for password changing according to the present disclosure. A client interface shown in FIG. 16 may be a client interface of the first client, and the object may enter the original password (namely, the original object password) and the new password (namely, the password configured for changing the original password, namely, the foregoing target object password, which may be entered twice) to change the object password.

In a feasible implementation, due to low complexity requirements of the object password, in some extreme cases, there may be a situation where the target device or a permission of the target device (for example, a lock screen password) is obtained by others. In this case, the object password of the object may face a threat of being cracked by brute force. In this case, the following protections for the object password of the object may further be performed according to the present disclosure.

When the object is required to enter the password, the first client may count and save a quantity of consecutive password entering errors of the object (where the security environment of the target device may be called to receive passwords entered by the object, and count and save the quantity of errors in the security environment). When the quantity of consecutive password entering errors of the object is greater than or equal to a specific quantity (for example, a first quantity threshold), a corresponding protection mechanism needs to be activated.

In all embodiments of the present disclosure, the protection mechanism may include, but is not limited to: limiting a time interval for the object to re-enter the password. The time interval may increase with a quantity of failures (namely, the quantity of errors). A larger quantity of errors indicates a longer time interval. For example, after incorrect passwords are entered for third times, it takes one minute before a password can be entered for the fourth time; after an incorrect password is entered for the fourth time, it takes five minutes before a password can be entered again, and so on; or/and, the object may set on the first client by himself/herself that when a quantity of password entering errors is greater than or equal to a specific quantity (for example, a second quantity threshold), the encrypted data in the first client needs to be destroyed. Therefore, according to the settings of the object, if the quantity of consecutive password entering errors of the object reaches the second quantity threshold, the first client may self-destruct the stored encrypted data (where this function may be enabled when the object has completed key backup (for example, backup of the encrypted data in the cloud or the local device)).

Through the foregoing protection mechanism, it can be ensured that even if the target device is lost or maliciously invaded, it is difficult for the object password of the object on the first client to be cracked by brute force. This can protect the account (namely, the account address) and the object password of the object on the first client.

According to the method provided in the present disclosure, the object only needs to remember a simple object password to manage the first client, and the object password needs to be used with the terminal device that stores the corresponding encrypted data. Therefore, even if the object password is leaked, the digital resources of the object under the account address in the first client will not be lost. The first client in the present disclosure may be built based on the blockchain network. According to the method in the present disclosure, the threshold for the object to use a key pair in the blockchain network can be lowered, and security of the digital resources of the object under the account address in the first client is improved. Regulatory requirements (for example, real-name registration of addresses) of relevant regions can be met, and strong underlying technical support is provided for promotion and popularization of blockchain networks and the foregoing Web3 application.

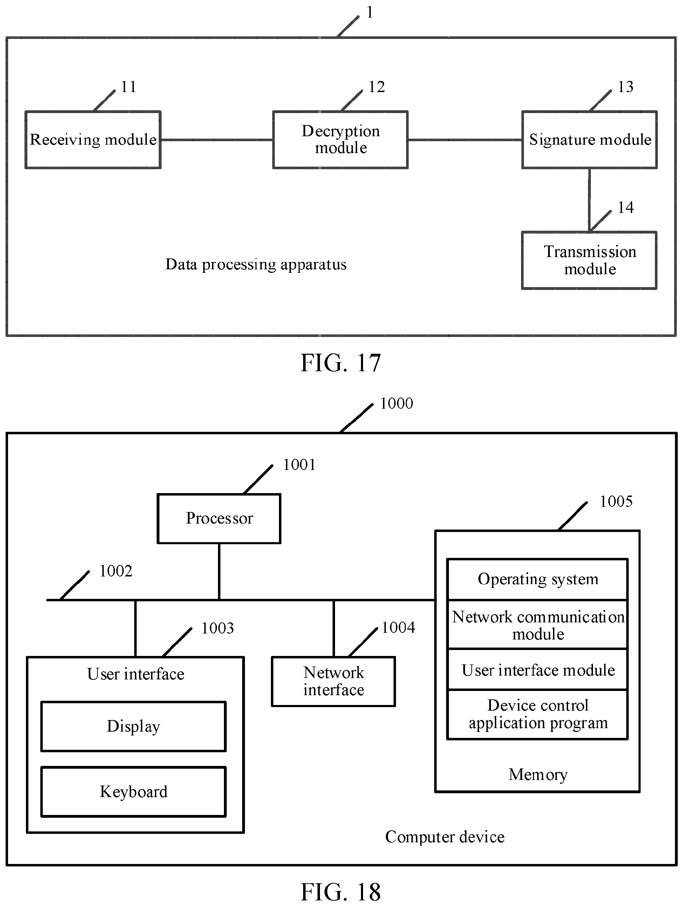

FIG. 17 is a schematic structural diagram of a data processing apparatus according to the present disclosure. The data processing apparatus may be a computer program (including program code) running in a computer device. For example, the data processing apparatus is application software. The data processing apparatus may be configured to perform corresponding operations in the method provided in the embodiments of the present disclosure. The apparatus is applied to a first client, the first client has a key pair, the key pair includes a public client key and a private client key, the first client stores encrypted data of the private client key, and the encrypted data is obtained by encrypting the private client key according to an object password. As shown in FIG. 17, the data processing apparatus 1 may include a receiving module 11, a decryption module 12, a signature module 13, and a transmission module 14.

The receiving module 11 is configured to receive the object password in response to obtaining a cloud hosting request for the encrypted data.

The decryption module 12 is configured to decrypt the encrypted data by using the received object password to obtain the private client key.

The signature module 13 is configured to sign the encrypted data based on the private client key to obtain a signature of the encrypted data.

The transmission module 14 is configured to transmit the public client key, the encrypted data, and the signature of the encrypted data to a cloud device of the first client, so that the cloud device stores the encrypted data after successfully verifying the encrypted data based on the public client key and the signature of the encrypted data.

In all embodiments of the present disclosure, the first client is included in a target device, the target device includes a security environment callable by the first client, and the security environment is an execution environment isolated from the first client.

Operations performed by the first client by calling the security environment include: the operation of receiving the object password; the operation of decrypting the encrypted data by using the received object password to obtain the private client key; and the operation of signing the encrypted data based on the private client key to obtain a signature of the encrypted data.

The signature of the encrypted data obtained by the first client is obtained in the called security environment.

In all embodiments of the present disclosure, the apparatus 1 is further configured to:
receive the object password and generate the key pair of the first client according to the received object password, in response to obtaining an account creation request;
encrypt the private client key in the key pair by using the received object password to obtain the encrypted data; and
generate a target account address of the first client by using the public client key in the key pair, and associatively store the target account address and the encrypted data, where
the first client is configured to perform service processing on the target account address according to the stored encrypted data.

In all embodiments of the present disclosure, the apparatus 1 is further configured to:
receive the object password in response to obtaining an address registration request;
decrypt the encrypted data by using the received object password to obtain the private client key;
obtain identity information, and sign the public client key and the identity information based on the private client key to obtain an identity signature;
transmit the identity signature, the identity information, and the public client key to the cloud device, so that the cloud device associatively stores the target account address and the identity information after successfully verifying the identity information based on the public client key and the identity signature, where the target account address is calculated by the cloud device based on the public client key; and
receive an address signature returned by the cloud device, where the address signature is obtained by the cloud device by signing the stored target account address by using a private key of the cloud device, and the address signature is configured for indicating successful registration of the target account address.

In all embodiments of the present disclosure, after obtaining the public client key, the encrypted data, and the signature of the encrypted data, the cloud device decrypts the signature of the encrypted data based on the public client key to obtain a first hash value of the encrypted data, and performs hash calculation on the encrypted data to obtain a second hash value of the encrypted data; and if determining through comparison that the first hash value and the second hash value are the same, the cloud device determines that the encrypted data is successfully verified; and
after successfully verifying the encrypted data, the cloud device calculates the target account address based on the public client key; and if detecting that the target account address has been successfully registered, the cloud device associatively stores the encrypted data and the target account address.

In all embodiments of the present disclosure, the apparatus 1 is further configured to:
obtain the identity information if the encrypted data stored in the first client is lost and a cloud-based encrypted data recovery request is obtained;
transmit the identity information to the cloud device, so that the cloud device obtains at least one account address associatively stored with the identity information after successfully verifying the identity information;
receive the at least one account address associatively stored with the identity information from the cloud device, and select, from the at least one account address received, the target account address that needs to be recovered;
transmit the target account address to the cloud device, so that the cloud device obtains the encrypted data associatively stored with the target account address; and
receive the encrypted data returned by the cloud device, and recover the encrypted data based on the received encrypted data and the target account address.

In all embodiments of the present disclosure, a manner of recovering the encrypted data based on the received encrypted data and the target account address by the apparatus 1 includes:
receiving the object password,
decrypting the received encrypted data based on the received object password to obtain the private client key;
calculating the public client key based on the private client key, and calculating an account address of the first client based on the public client key; and
associatively storing the target account address and the received encrypted data in the first client if the calculated account address is the same as the target account address.

In all embodiments of the present disclosure, the first client is included in a target device of an object, and the apparatus 1 is further configured to:
receive the object password in response to obtaining a local backup request for the private client key;
decrypt the encrypted data based on the received object password to obtain the private client key;
sign the encrypted data based on the private client key to obtain the signature of the encrypted data;
encode the encrypted data and the signature of the encrypted data to obtain encoded data; and
output the encoded data, where the outputted encoded data is configured to be exported and stored in a local storage space of the terminal device, and the local storage space does not belong to the first client.

In all embodiments of the present disclosure, the apparatus 1 is further configured to:
obtain the encoded data imported from the local storage space if the encrypted data stored in the first client is lost and a local-based encrypted data recovery request is obtained;
decode the encoded data to obtain the encrypted data;
receive the object password, and decrypt, based on the received object password, the encrypted data obtained through the decoding to obtain the private client key;
calculate the public client key based on the private client key, and calculate a target account address of the first client based on the public client key; and
associatively store the target account address and the encrypted data obtained through the decoding in the first client.

In all embodiments of the present disclosure, a manner of signing the encrypted data based on the private client key by the signature module 13 to obtain a signature of the encrypted data includes:
performing hash calculation on the encrypted data to obtain a hash value of the encrypted data; and
encrypting the hash value of the encrypted data by using the private client key to obtain the signature of the encrypted data.

In all embodiments of the present disclosure, the target account address of the first client and the encrypted data are associatively stored, the target account address is calculated based on the public client key, and the apparatus 1 is further configured to:
output at least one account address of the first client in response to receiving a first connection request submitted by a second client, where the first connection request carries a client identifier of the second client;
select the target account address that needs to be connected to from the at least one account address outputted, and obtain the encrypted data associatively stored with the target account address;
receive the object password, and decrypt the obtained encrypted data based on the received object password to obtain the private client key;
generate a communication key between the first client and the second client, and sign the communication key by using the private client key to obtain a signature of the communication key;
encrypt the communication key by using a public key of the second client to obtain an encrypted communication key;
return the public client key, the signature of the communication key, and the encrypted communication key to the second client, so that the second client decrypts the encrypted communication key by using a private key of the second client to obtain the communication key, and associatively stores the target account address and the communication key after successfully verifying the communication key based on the signature of the communication key and the public client key; and
receive prompt information indicating a successful connection from the second client, and associatively store the client identifier of the second client, the target account address, and the communication key.

In all embodiments of the present disclosure, the apparatus 1 is further configured to:
output at least one account address of the first client if a second connection request submitted by the second client is received after the first client is disconnected from the second client, where initiation time of the second connection request is later than initiation time of the first connection request, and the second connection request carries the client identifier of the second client;
select the target account address that needs to be connected to from the at least one account address outputted;
encrypt the communication key by using the public key of the second client to obtain the encrypted communication key, if it is detected that the communication key associatively stored with the target account address and the client identifier exits;
return the encrypted communication key and the target account address to the second client, so that the second client decrypts the encrypted communication key by using the private key of the second client to obtain the communication key, and generates prompt information indicating a successful connection to the first client if it is detected that the communication key associatively stored with the target account address exists; and
receive the prompt information indicating the successful connection from the second client.

In all embodiments of the present disclosure, the apparatus 1 is further configured to:
output at least one account address of the first client if receiving a first resource query request initiated by a second client, where the first resource check request carries a random number generated by the second client;
select a target account address that needs to be queried from the at least one account address outputted;
receive the object password, and decrypt the stored encrypted data based on the received object password to obtain the private client key;
sign the random number by using the private client key to obtain a random number signature;
return the random number signature and the public client key to the second client, so that the second client initiates a second resource query request to the first client based on the public client key after successfully verifying the random number signature based on the public client key;
receive the second resource query request submitted by the second client, and query a resource of an object under the target account address according to the public client key carried in the second resource query request; and
return a query result regarding the resource under the target account address to the second client.

In all embodiments of the present disclosure, the first client further has a target account address stored therein, the target account address is calculated based on the public client key, and the apparatus 1 is further configured to:
receive the object password and a target object password configured for changing the object password if obtaining a password change request for the target account address;
decrypt the encrypted data by using the received object password to obtain the private client key;
calculate the public client key according to the private client key, and calculate an account address of the first client according to the public client key; and
encrypt the private client key by using the target object password to obtain changed encrypted data and store the changed encrypted data, if the calculated account address is the same as the target account address.

In all embodiments of the present disclosure, if the first client is built based on a blockchain network, the cloud device is a node device of a blockchain node in the blockchain network.

In all embodiments of the present disclosure, the apparatus 1 is further configured to:
assemble, if a transaction initiation request is obtained, a to-be-initiated target transaction according to an indication of the transaction initiation request;
receive the object password, and decrypt the encrypted data based on the received object password to obtain the private client key;
sign the target transaction based on the private client key to obtain a transaction signature; and
broadcast the target transaction and the transaction signature to the blockchain network, so that the blockchain network executes the target transaction after successfully reaching a consensus on the target transaction based on the transaction signature, and uploads the target transaction to the blockchain network.

According to an embodiment of the present disclosure, the operations involved in the data processing method shown in FIG. 3 may be performed by various modules in the data processing apparatus 1 shown in FIG. 17. For example, operation S101 shown in FIG. 3 may be performed by the receiving module 11 in FIG. 17, operation S102 shown in FIG. 3 may be performed by the decryption module 12 in FIG. 17, operation S103 shown in FIG. 3 may be performed by the signature module 13 in FIG. 17, and operation S104 shown in FIG. 3 may be performed by the transmission module 14 in FIG. 17.

In the present disclosure, the first client has a key pair, the key pair may include a public client key and a private client key, the first client stores encrypted data of the private client key, and the encrypted data is obtained by encrypting the private client key based on an object password. The first client may receive the object password if obtaining a cloud hosting request for the encrypted data, may decrypt the encrypted data by using the received object password to obtain the private client key, and may further sign the encrypted data based on the private client key to obtain a signature of the encrypted data. Further, the first client may transmit the public client key, the encrypted data, and the signature of the encrypted data to a cloud device of the first client, so that the cloud device stores the encrypted data after successfully verifying the encrypted data based on the public client key and the signature of the encrypted data. According to the method provided in the present disclosure, the encrypted data of the private client key can be cloud-hosted. Through the cloud hosting for the encrypted data, reliability of keeping the private client key is achieved. Instead of hosting the private client key directly in the cloud device, the encrypted data of the private client key is hosted in the cloud device. Therefore, while implementing the cloud hosting for the private client key, security and confidentiality of the private client key are also guaranteed.

According to an embodiment of the present disclosure, the modules in the data processing apparatus 1 shown in FIG. 17 may be separately or wholly combined into one or more units, or one (or more) of the units herein may further be divided into a plurality of sub-units of smaller functions. In this way, same operations can be implemented, and implementation of the technical effects of the embodiments of the present disclosure is not affected. The foregoing modules are divided based on logical functions. In an actual application, a function of one module may alternatively be implemented by a plurality of units, or functions of a plurality of modules are implemented by one unit. In another embodiment of the present disclosure, the data processing apparatus 1 may further include other units. In an actual application, the functions may also be cooperatively implemented by other units and may be cooperatively implemented by a plurality of units.

According to an embodiment of the present disclosure, a computer program (including program code) that can perform the operations in the corresponding method shown in FIG. 3 may be run on a general computer device, such as a computer, which includes processing elements and storage elements such as a central processing unit (CPU), a random access memory (RAM), and a read-only memory (ROM), to construct the data processing apparatus 1 shown in FIG. 17 and implement the data processing method in the embodiments of the present disclosure. The computer program may be recorded on, for example, a computer-readable recording medium, and may be loaded into the foregoing computing device by using the computer-readable recording medium and run on the computing device.

FIG. 18 is a schematic structural diagram of a computer device according to the present disclosure. As shown in FIG. 18, the computer device 1000 may include: a processor 1001, a network interface 1004, and a memory 1005. In addition, the computer device 1000 may further include: a user interface 1003 and at least one communication bus 1002. The communication bus 1002 is configured to implement connection and communication between the components. The user interface 1003 may include a display and a keyboard. The user interface 1003 may further include a standard wired interface and a standard wireless interface. In all embodiments of the present disclosure, the network interface 1004 may include a standard wired interface and a standard wireless interface (for example, a Wi-Fi interface). The memory 1005 may be a high-speed RAM, or may be a non-volatile memory, for example, at least one magnetic disk memory. In all embodiments of the present disclosure, the memory 1005 may further be at least one storage apparatus that is located far away from the processor 1001. As shown in FIG. 18, the memory 1005, which is used as a computer storage medium, may include an operating system, a network communication module, a user interface module, and a device control application program.

In the computer device 1000 shown in FIG. 18, the network interface 1004 can provide network communication functions. The user interface 1003 is mainly configured to provide an input interface for a user. The processor 1001 may be configured to invoke the device control application program, stored in the memory 1005, to implement:
a receiving module, configured to receive an object password if a cloud hosting request for encrypted data is obtained, where a first client has a key pair, the key pair includes a public client key and a private client key, the first client stores the encrypted data of the private client key, and the encrypted data is obtained by encrypting the private client key based on the object password;
a decryption module, configured to decrypt the encrypted data by using the received object password to obtain the private client key;
a signature module, configured to sign the encrypted data based on the private client key to obtain a signature of the encrypted data; and
a transmission module, configured to transmit the public client key, the encrypted data, and the signature of the encrypted data to a cloud device of the first client, so that the cloud device stores the encrypted data after successfully verifying the encrypted data based on the public client key and the signature of the encrypted data.

The computer device 1000 described in this embodiment of the present disclosure can implement the descriptions of the data processing method in the embodiment corresponding to FIG. 3, and can also implement the descriptions of the data processing apparatus 1 in the embodiment corresponding to FIG. 17. Details are not described herein again. In addition, beneficial effects achieved by using the same method are not described herein again.

In addition, the present disclosure further provides a computer-readable storage medium. The computer-readable storage medium has a computer program executed by the data processing apparatus 1 described above stored therein, and the computer program includes program instructions. When executing the program instructions, the processor can implement the descriptions of the data processing method in the embodiment corresponding to FIG. 3. Therefore, details are not described herein again. In addition, beneficial effects achieved by using the same method are not described herein again. For technical details that are not disclosed in the embodiments of the computer storage medium of the present disclosure, refer to the method embodiments of the present disclosure.

In an example, the program instructions may be deployed to be executed on a computer device, or executed on a plurality of computer devices at the same location, or executed on a plurality of computer devices that are distributed at a plurality of locations and interconnected by using a communication network. The plurality of computer devices that are distributed at the plurality of locations and interconnected by using the communication network may form a blockchain network.

The computer-readable storage medium may be the data processing apparatus according to any embodiment described above or an internal storage unit of the foregoing computer device, for example, a hard disk or an internal memory of the computer device. The computer-readable storage medium may alternatively be an external storage device of the computer device, for example, a removable hard disk, a smart media card (SMC), a secure digital (SD) card, or a flash card equipped on the computer device. Further, the computer-readable storage medium may alternatively include both an internal storage unit and an external storage device of the computer device. The computer-readable storage medium is configured to store the computer program and another program and data that are required by the computer device. The computer-readable storage medium may further be configured to temporarily store data that has been outputted or data to be outputted.

The present disclosure provides a computer program product or a computer program. The computer program product or the computer program includes computer instructions, and the computer instructions are stored in a computer-readable storage medium. A processor of a computer device reads the computer instructions from the computer-readable storage medium, and executes the computer instructions, so that the computer device implements the descriptions of the data processing method in the embodiment corresponding to FIG. 3. Therefore, details are not described herein again. In addition, beneficial effects achieved by using the same method are not described herein again. For technical details that are not disclosed in the embodiments of the computer-readable storage medium of the present disclosure, refer to the method embodiments of the present disclosure.

The terms "first", "second", and the like in the specification, the claims, and the accompanying drawings of the embodiments of the present disclosure are used to distinguish between different objects, rather than describing a specific sequence. In addition, the term "include" and any variations thereof are intended to indicate non-exclusive inclusion. For example, a process, a method, an apparatus, a product, or a device that includes a series of operations or units is not limited to the listed operations or modules, and further includes an operation or a module that is not listed, or further includes another operation or unit that is intrinsic to the process, the method, the apparatus, the product, or the device.

A person of ordinary skill in the art may understand that, units and algorithm operations of the examples described in the embodiments herein may be implemented by electronic hardware, computer software, or a combination thereof. To clearly describe the interchangeability between the hardware and the software, the foregoing has generally described compositions and operations of each example based on functions. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of the present disclosure.

The method and the related apparatus provided in the embodiments of the present disclosure are described with reference to the method flowcharts and/or schematic structural diagrams provided in the embodiments of the present disclosure. Specifically, each process and/or block of a method flowchart and/or a schematic structural diagram, and combinations of processes and/or blocks in a flowchart and/or a block diagram can be implemented by using computer program instructions. The computer program instructions may be provided to a general-purpose computer, a special-purpose computer, an embedded processor, or a processor of another programmable data processing device to generate a machine, so that an apparatus configured to implement functions specified in one or more processes in the flowcharts and/or one or more blocks in the schematic structural diagrams is generated by using instructions executed by the general-purpose computer or the processor of another programmable data processing device. The computer program instructions may also be stored in a computer readable memory that can instruct a computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the schematic structural diagrams. The computer program instructions may also be loaded into a computer or another programmable data processing device, so that a series of operations are performed on the computer or another programmable data processing device to generate processing implemented by a computer, and instructions executed on the computer or another programmable data processing device provide operations for implementing functions specified in one or more procedures in the flowcharts and/or one or more blocks in the schematic structural diagrams.

What is disclosed above is merely exemplary embodiments of the present disclosure, and certainly is not intended to limit the scope of the claims of the present disclosure. Therefore, equivalent variations made in accordance with the claims of the present disclosure shall fall within the scope of the present disclosure.

## Claims

1. A data processing method, applied to a terminal device comprising a first client, the first client having a key pair, the key pair comprising a public client key and a private client key, the first client storing encrypted data of the private client key, the encrypted data being obtained by encrypting the private client key according to an object password, and the method comprising:
receiving (S101) the object password in response to obtaining a cloud hosting request for the encrypted data;
decrypting (S102) the encrypted data by using the received object password to obtain the private client key;
signing (S103) the encrypted data based on the private client key to obtain a signature of the encrypted data; and
transmitting (S104) the public client key, the encrypted data, and the signature of the encrypted data to a cloud device of the first client, the public client key and the signature of the encrypted data being used for verifying the encrypted data at the cloud device before the encrypted data is stored in the cloud device.

2. The method according to claim 1, wherein the terminal device comprises a security environment callable by the first client, and the security environment is an execution environment isolated from the first client; and
operations performed by the first client by calling the security environment comprise:
receiving the object password;
decrypting the encrypted data by using the received object password to obtain the private client key; and
signing the encrypted data based on the private client key to obtain a signature of the encrypted data, wherein
the signature of the encrypted data obtained by the first client is obtained in the called security environment.

3. The method according to claim 1, wherein the method further comprises:
receiving the object password and generating the key pair of the first client, in response to receiving an account creation request;
encrypting the private client key in the key pair by using the received object password to obtain the encrypted data; and
generating a target account address of the first client by using the public client key in the key pair, and associatively storing the target account address and the encrypted data, wherein
the first client is configured to perform service processing on the target account address according to the stored encrypted data.

4. The method according to claim 1, wherein the method further comprises:
receiving (S201) the object password in response to obtaining an address registration request;
decrypting (S202) the encrypted data by using the received object password to obtain the private client key;
obtaining (S203) identity information, and signing the public client key and the identity information based on the private client key to obtain an identity signature;
transmitting (S204) the identity signature, the identity information, and the public client key to the cloud device, wherein the public client key and the identity signature are used for verifying the identity information at the cloud device before the target account address and the identity information are stored associatively in the cloud device, the target account address is calculated by the cloud device based on the public client key; and
receiving (S205) an address signature returned by the cloud device, wherein the address signature is obtained by signing the stored target account address using a private key of the cloud device at the cloud device, and the address signature indicating successful registration of the target account address.

5. The method according to claim 4, further comprising:
obtaining (S301) the identity information if the encrypted data stored in the first client is lost and a cloud-based encrypted data recovery request is obtained;
transmitting (S302) the identity information to the cloud device;
receiving (S303) the at least one account address associatively stored with the identity information at the cloud device, and selecting, from the at least one account address received, the target account address that needs to be recovered;
transmitting (S304) the target account address to the cloud device, wherein the cloud device obtains the encrypted data; and
receiving (S305) from the cloud device second encrypted data which is associatively stored with the target account address at the cloud device, and recovering the encrypted data based on the second encrypted data and the target account address;
wherein the recovering the encrypted data based on the second encrypted data and the target account address comprises:
receiving the object password;
decrypting the second encrypted data based on the received object password to obtain the private client key;
calculating the public client key based on the private client key, and calculating an account address of the first client based on the public client key; and
associatively storing the target account address and the second encrypted data in the first client if the calculated account address is the same as the target account address.

6. The method according to claim 1, wherein the method further comprises:
receiving (S401) the object password in response to obtaining a local backup request for the private client key;
decrypting (S402) the encrypted data based on the received object password to obtain the private client key;
signing (S403) the encrypted data based on the private client key to obtain the signature of the encrypted data;
encoding (S404) the encrypted data and the signature of the encrypted data to obtain encoded data; and
outputting (S405) the encoded data, wherein the outputted encoded data is to be exported and stored in a local storage space of the terminal device, and the local storage space does not belong to the first client;
wherein the method further comprises:
obtaining the encoded data imported from the local storage space if the encrypted data stored in the first client is lost and a local-based encrypted data recovery request is obtained;
decoding the encoded data to obtain the encrypted data;
receiving the object password, and decrypting, the encrypted data obtained through the decoding based on the received object password to obtain the private client key;
calculating the public client key based on the private client key, and calculating a target account address of the first client based on the public client key; and
associatively storing the target account address and the encrypted data obtained through the decoding in the first client.

7. The method according to claim 1, wherein the operation of signing the encrypted data based on the private client key to obtain a signature of the encrypted data comprises:
performing hash calculation on the encrypted data to obtain a hash value of the encrypted data; and
encrypting the hash value of the encrypted data by using the private client key to obtain the signature of the encrypted data.

8. The method according to claim 1, wherein a target account address of the first client and the encrypted data are associatively stored, the target account address is calculated based on the public client key, and the method further comprises:
outputting (S501) at least one account address of the first client in response to receiving a first connection request submitted by a second client, wherein the first connection request carries a client identifier of the second client;
selecting (S502) the target account address that needs to be connected to from the at least one account address outputted, and obtaining the encrypted data associatively stored with the target account address;
receiving (S503) the object password, and decrypting the obtained encrypted data based on the received object password to obtain the private client key;
generating (S504) a communication key between the first client and the second client, and signing the communication key by using the private client key to obtain a signature of the communication key;
encrypting (S505) the communication key by using a public key of the second client to obtain an encrypted communication key;
returning (S506) the public client key, the signature of the communication key, and the encrypted communication key to the second client, the encrypted communication key being used for decryption using a private key of the second client to obtain the communication key, and the signature of the communication key being used for verifying the communication key before the communication key and the target account address are associatively stored at the second client; and
receiving (S507) prompt information indicating a connection from the second client, and associatively storing the client identifier of the second client, the target account address, and the communication key.

9. The method according to claim 8, wherein the method further comprises:
outputting at least one account address of the first client if a second connection request submitted by the second client is received after the first client is disconnected from the second client, wherein initiation time of the second connection request is later than initiation time of the first connection request, and the second connection request carries the client identifier of the second client;
selecting the target account address that needs to be connected to from the at least one account address outputted;
encrypting the communication key by using the public key of the second client to obtain the encrypted communication key, if the communication key associatively stored with the target account address and the client identifier exits;
returning the encrypted communication key and the target account address to the second client, so that the second client decrypts the encrypted communication key by using the private key of the second client to obtain the communication key, and generates prompt information indicating a connection to the first client if the communication key associatively stored with the target account address exists; and
receiving the prompt information indicating the connection from the second client.

10. The method according to claim 1, wherein the method further comprises:
outputting at least one account address of the first client if receiving a first resource query request initiated by a second client, wherein the first resource check request carries a random number generated by the second client;
selecting a target account address that needs to be queried from the at least one account address outputted;
receiving the object password, and decrypting the stored encrypted data based on the received object password to obtain the private client key;
signing the random number by using the private client key to obtain a random number signature;
returning the random number signature and the public client key to the second client;
receiving a second resource query request submitted by the second client, and querying a resource of an object under the target account address according to a public client key carried in the second resource query request; and
returning a query result regarding the resource under the target account address to the second client.

11. The method according to claim 1, wherein the first client further has a target account address stored therein, the target account address is calculated based on the public client key, and the method further comprises:
receiving the object password and a target object password configured for changing the object password, if obtaining a password change request for the target account address;
decrypting the encrypted data by using the received object password to obtain the private client key;
calculating the public client key according to the private client key, and calculating an account address of the first client according to the public client key; and
encrypting the private client key by using the target object password to obtain changed encrypted data and storing the changed encrypted data, if the calculated account address is the same as the target account address.

12. The method according to claim 1, wherein if the first client is built based on a blockchain network, the cloud device is a node device of a blockchain node in the blockchain network;
wherein the method further comprises:
assembling (S601), if a transaction initiation request is obtained, a to-be-initiated target transaction according to an indication of the transaction initiation request;
receiving (S602) the object password, and decrypting the encrypted data based on the received object password to obtain the private client key;
signing (S603) the target transaction based on the private client key to obtain a transaction signature; and
broadcasting (S604) the target transaction and the transaction signature to the blockchain network, wherein the blockchain network executes the target transaction after successfully reaching a consensus on the target transaction based on the transaction signature, and uploads the target transaction to the blockchain network.

13. A data processing apparatus, used in a terminal device comprising a first client, the first client having a key pair, the key pair comprising a public client key and a private client key, the first client storing encrypted data of the private client key, the encrypted data being obtained by encrypting the private client key according to an object password, and the apparatus comprising:
a receiving module (11), configured to receive the object password in response to obtaining a cloud hosting request for the encrypted data;
a decryption module (12), configured to decrypt the encrypted data by using the received object password to obtain the private client key;
a signature module (13), configured to sign the encrypted data based on the private client key to obtain a signature of the encrypted data; and
a transmission module (14), configured to transmit the public client key, the encrypted data, and the signature of the encrypted data to a cloud device of the first client, the public client key and the signature of the encrypted data being used for verifying the encrypted data at the cloud device before the encrypted data is stored in the cloud device.

14. A computer program product, comprising a computer program/instruction, the computer program/instruction, when executed by a processor, implementing operations of the method according to any one of claims 1 to 12.

15. A computer-readable storage medium, having a computer program stored therein, the computer program being suitable to be loaded by a processor to perform the method according to any one of claims 1 to 12.

## Patentansprüche

1. Ein Datenverarbeitungsverfahren, angewendet auf eine Endgerätvorrichtung, die einen ersten Client umfasst, wobei der erste Client ein Schlüsselpaar aufweist, wobei das Schlüsselpaar einen öffentlichen Client-Schlüssel und einen privaten Client-Schlüssel umfasst, wobei der erste Client verschlüsselte Daten des privaten Client-Schlüssels speichert, wobei die verschlüsselten Daten durch Verschlüsseln des privaten Client-Schlüssels gemäß einem Objektpasswort erhalten werden, und wobei das Verfahren umfasst:
Empfangen (S101) des Objektpassworts als Reaktion auf das Erhalten einer Cloud-Hosting-Anforderung für die verschlüsselten Daten;
Entschlüsseln (S102) der verschlüsselten Daten unter Verwendung des empfangenen Objektpassworts, um den privaten Client-Schlüssel zu erhalten;
Signieren (S103) der verschlüsselten Daten basierend auf dem privaten Client-Schlüssel, um eine Signatur der verschlüsselten Daten zu erhalten; und
Senden (S104) des öffentlichen Client-Schlüssels, der verschlüsselten Daten und der Signatur der verschlüsselten Daten an eine Cloud-Vorrichtung des ersten Clients, wobei der öffentliche Client-Schlüssel und die Signatur der verschlüsselten Daten zum Verifizieren der verschlüsselten Daten an der Cloud-Vorrichtung verwendet werden, bevor die verschlüsselten Daten in der Cloud-Vorrichtung gespeichert werden.

2. Das Verfahren nach Anspruch 1, wobei die Endgerätvorrichtung eine vom ersten Client aufrufbare Sicherheitsumgebung umfasst und die Sicherheitsumgebung eine vom ersten Client isolierte Ausführungsumgebung ist; und
von dem ersten Client durch Aufrufen der Sicherheitsumgebung ausgeführte Operationen umfassen:
Empfangen des Objektpassworts;
Entschlüsseln der verschlüsselten Daten unter Verwendung des empfangenen Objektpassworts, um den privaten Client-Schlüssel zu erhalten; und
Signieren der verschlüsselten Daten basierend auf dem privaten Client-Schlüssel, um eine Signatur der verschlüsselten Daten zu erhalten, wobei
die von dem ersten Client erhaltene Signatur der verschlüsselten Daten in der aufgerufenen Sicherheitsumgebung erhalten wird.

3. Das Verfahren nach Anspruch 1, wobei das Verfahren ferner umfasst:
Empfangen des Objektpassworts und Erzeugen des Schlüsselpaars des ersten Clients als Reaktion auf das Empfangen einer Kontoerstellungsanforderung;
Verschlüsseln des privaten Client-Schlüssels im Schlüsselpaar unter Verwendung des empfangenen Objektpassworts, um die verschlüsselten Daten zu erhalten; und
Erzeugen einer Zielkontoadresse des ersten Clients unter Verwendung des öffentlichen Client-Schlüssels im Schlüsselpaar und assoziatives Speichern der Zielkontoadresse und der verschlüsselten Daten, wobei
der erste Client dafür konfiguriert ist, eine Dienstverarbeitung an der Zielkontoadresse gemäß den gespeicherten verschlüsselten Daten durchzuführen.

4. Das Verfahren nach Anspruch 1, wobei das Verfahren ferner umfasst:
Empfangen (S201) des Objektpassworts als Reaktion auf das Erhalten einer Adressregistrierungsanforderung;
Entschlüsseln (S202) der verschlüsselten Daten unter Verwendung des empfangenen Objektpassworts, um den privaten Client-Schlüssel zu erhalten;
Erhalten (S203) von Identitätsinformationen und Signieren des öffentlichen Client-Schlüssels und der Identitätsinformationen basierend auf dem privaten Client-Schlüssel, um eine Identitätssignatur zu erhalten;
Senden (S204) der Identitätssignatur, der Identitätsinformationen und des öffentlichen Client-Schlüssels an die Cloud-Vorrichtung, wobei der öffentliche Client-Schlüssel und die Identitätssignatur zum Verifizieren der Identitätsinformationen an der Cloud-Vorrichtung verwendet werden, bevor die Zielkontoadresse und die Identitätsinformationen assoziativ in der Cloud-Vorrichtung gespeichert werden, wobei die Zielkontoadresse von der Cloud-Vorrichtung basierend auf dem öffentlichen Client-Schlüssel berechnet wird; und
Empfangen (S205) einer von der Cloud-Vorrichtung zurückgegebenen Adresssignatur, wobei die Adresssignatur durch Signieren der gespeicherten Zielkontoadresse unter Verwendung eines privaten Schlüssels der Cloud-Vorrichtung an der Cloud-Vorrichtung erhalten wird und die Adresssignatur eine erfolgreiche Registrierung der Zielkontoadresse anzeigt.

5. Das Verfahren nach Anspruch 4, ferner umfassend:
Erhalten (S301) der Identitätsinformationen, falls die im ersten Client gespeicherten verschlüsselten Daten verloren sind und eine cloudbasierte Anforderung zur Wiederherstellung verschlüsselter Daten erhalten wird;
Senden (S302) der Identitätsinformationen an die Cloud-Vorrichtung;
Empfangen (S303) der mindestens einen Kontoadresse, die an der Cloud-Vorrichtung assoziativ mit den Identitätsinformationen gespeichert ist, und Auswählen aus der mindestens einen empfangenen Kontoadresse der Zielkontoadresse, die wiederhergestellt werden muss;
Senden (S304) der Zielkontoadresse an die Cloud-Vorrichtung, wobei die Cloud-Vorrichtung die verschlüsselten Daten erhält; und
Empfangen (S305) von der Cloud-Vorrichtung zweiter verschlüsselter Daten, die an der Cloud-Vorrichtung assoziativ mit der Zielkontoadresse gespeichert sind, und Wiederherstellen der verschlüsselten Daten basierend auf den zweiten verschlüsselten Daten und der Zielkontoadresse;
wobei das Wiederherstellen der verschlüsselten Daten basierend auf den zweiten verschlüsselten Daten und der Zielkontoadresse umfasst:
Empfangen des Objektpassworts;
Entschlüsseln der zweiten verschlüsselten Daten basierend auf dem empfangenen Objektpasswort, um den privaten Client-Schlüssel zu erhalten;
Berechnen des öffentlichen Client-Schlüssels basierend auf dem privaten Client-Schlüssel und Berechnen einer Kontoadresse des ersten Clients basierend auf dem öffentlichen Client-Schlüssel; und
assoziatives Speichern der Zielkontoadresse und der zweiten verschlüsselten Daten im ersten Client, falls die berechnete Kontoadresse gleich der Zielkontoadresse ist.

6. Das Verfahren nach Anspruch 1, wobei das Verfahren ferner umfasst:
Empfangen (S401) des Objektpassworts als Reaktion auf das Erhalten einer lokalen Sicherungsanforderung für den privaten Client-Schlüssel;
Entschlüsseln (S402) der verschlüsselten Daten basierend auf dem empfangenen Objektpasswort, um den privaten Client-Schlüssel zu erhalten;
Signieren (S403) der verschlüsselten Daten basierend auf dem privaten Client-Schlüssel, um die Signatur der verschlüsselten Daten zu erhalten;
Kodieren (S404) der verschlüsselten Daten und der Signatur der verschlüsselten Daten, um kodierte Daten zu erhalten; und
Ausgeben (S405) der kodierten Daten, wobei die ausgegebenen kodierten Daten zum Exportieren und Speichern in einem lokalen Speicherraum der Endgerätvorrichtung vorgesehen sind und der lokale Speicherraum nicht zu dem ersten Client gehört;
wobei das Verfahren ferner umfasst:
Erhalten der aus dem lokalen Speicherraum importierten kodierten Daten, falls die im ersten Client gespeicherten verschlüsselten Daten verloren sind und eine lokalbasierte Anforderung zur Wiederherstellung verschlüsselter Daten erhalten wird;
Dekodieren der kodierten Daten, um die verschlüsselten Daten zu erhalten;
Empfangen des Objektpassworts und Entschlüsseln der durch das Dekodieren erhaltenen verschlüsselten Daten basierend auf dem empfangenen Objektpasswort, um den privaten Client-Schlüssel zu erhalten;
Berechnen des öffentlichen Client-Schlüssels basierend auf dem privaten Client-Schlüssel und Berechnen einer Zielkontoadresse des ersten Clients basierend auf dem öffentlichen Client-Schlüssel; und
assoziatives Speichern der Zielkontoadresse und der durch das Dekodieren erhaltenen verschlüsselten Daten im ersten Client.

7. Das Verfahren nach Anspruch 1, wobei die Operation des Signierens der verschlüsselten Daten basierend auf dem privaten Client-Schlüssel, um eine Signatur der verschlüsselten Daten zu erhalten, umfasst:
Durchführen einer Hashberechnung an den verschlüsselten Daten, um einen Hashwert der verschlüsselten Daten zu erhalten; und
Verschlüsseln des Hashwerts der verschlüsselten Daten unter Verwendung des privaten Client-Schlüssels, um die Signatur der verschlüsselten Daten zu erhalten.

8. Das Verfahren nach Anspruch 1, wobei eine Zielkontoadresse des ersten Clients und die verschlüsselten Daten assoziativ gespeichert sind, wobei die Zielkontoadresse basierend auf dem öffentlichen Client-Schlüssel berechnet wird, und wobei das Verfahren ferner umfasst:
Ausgeben (S501) mindestens einer Kontoadresse des ersten Clients als Reaktion auf das Empfangen einer ersten Verbindungsanforderung, die von einem zweiten Client eingereicht wird, wobei die erste Verbindungsanforderung eine Clientkennung des zweiten Clients trägt;
Auswählen (S502) der Zielkontoadresse, zu der eine Verbindung hergestellt werden muss, aus der mindestens einen ausgegebenen Kontoadresse und Erhalten der verschlüsselten Daten, die assoziativ mit der Zielkontoadresse gespeichert sind;
Empfangen (S503) des Objektpassworts und Entschlüsseln der erhaltenen verschlüsselten Daten basierend auf dem empfangenen Objektpasswort, um den privaten Client-Schlüssel zu erhalten;
Erzeugen (S504) eines Kommunikationsschlüssels zwischen dem ersten Client und dem zweiten Client und Signieren des Kommunikationsschlüssels unter Verwendung des privaten Client-Schlüssels, um eine Signatur des Kommunikationsschlüssels zu erhalten;
Verschlüsseln (S505) des Kommunikationsschlüssels unter Verwendung eines öffentlichen Schlüssels des zweiten Clients, um einen verschlüsselten Kommunikationsschlüssel zu erhalten;
Zurücksenden (S506) des öffentlichen Client-Schlüssels, der Signatur des Kommunikationsschlüssels und des verschlüsselten Kommunikationsschlüssels an den zweiten Client, wobei der verschlüsselte Kommunikationsschlüssel zur Entschlüsselung unter Verwendung eines privaten Schlüssels des zweiten Clients verwendet wird, um den Kommunikationsschlüssel zu erhalten, und wobei die Signatur des Kommunikationsschlüssels zum Verifizieren des Kommunikationsschlüssels verwendet wird, bevor der Kommunikationsschlüssel und die Zielkontoadresse beim zweiten Client assoziativ gespeichert werden; und
Empfangen (S507) von Hinweisinformationen, die eine Verbindung von dem zweiten Client anzeigen, und assoziatives Speichern der Clientkennung des zweiten Clients, der Zielkontoadresse und des Kommunikationsschlüssels.

9. Das Verfahren nach Anspruch 8, wobei das Verfahren ferner umfasst:
Ausgeben mindestens einer Kontoadresse des ersten Clients, falls eine zweite Verbindungsanforderung, die von dem zweiten Client eingereicht wird, empfangen wird, nachdem die Verbindung zwischen dem ersten Client und dem zweiten Client getrennt wurde, wobei eine Initiierungszeit der zweiten Verbindungsanforderung später ist als eine Initiierungszeit der ersten Verbindungsanforderung und die zweite Verbindungsanforderung die Clientkennung des zweiten Clients trägt;
Auswählen der Zielkontoadresse, zu der eine Verbindung hergestellt werden muss, aus der mindestens einen ausgegebenen Kontoadresse;
Verschlüsseln des Kommunikationsschlüssels unter Verwendung des öffentlichen Schlüssels des zweiten Clients, um den verschlüsselten Kommunikationsschlüssel zu erhalten, falls der Kommunikationsschlüssel, der assoziativ mit der Zielkontoadresse und der Clientkennung gespeichert ist, existiert;
Zurücksenden des verschlüsselten Kommunikationsschlüssels und der Zielkontoadresse an den zweiten Client, sodass der zweite Client den verschlüsselten Kommunikationsschlüssel unter Verwendung des privaten Schlüssels des zweiten Clients entschlüsselt, um den Kommunikationsschlüssel zu erhalten, und Hinweisinformationen erzeugt, die eine Verbindung zu dem ersten Client anzeigen, falls der Kommunikationsschlüssel, der assoziativ mit der Zielkontoadresse gespeichert ist, existiert; und
Empfangen der Hinweisinformationen, die die Verbindung von dem zweiten Client anzeigen.

10. Das Verfahren nach Anspruch 1, wobei das Verfahren ferner umfasst:
Ausgeben mindestens einer Kontoadresse des ersten Clients, falls eine erste Ressourcenabfrageanforderung empfangen wird, die von einem zweiten Client initiiert wird, wobei die erste Ressourcenprüfanforderung eine von dem zweiten Client erzeugte Zufallszahl trägt;
Auswählen einer Zielkontoadresse, die abgefragt werden muss, aus der mindestens einen ausgegebenen Kontoadresse;
Empfangen des Objektpassworts und Entschlüsseln der gespeicherten verschlüsselten Daten basierend auf dem empfangenen Objektpasswort, um den privaten Client-Schlüssel zu erhalten;
Signieren der Zufallszahl unter Verwendung des privaten Client-Schlüssels, um eine Zufallszahlsignatur zu erhalten;
Zurücksenden der Zufallszahlsignatur und des öffentlichen Client-Schlüssels an den zweiten Client;
Empfangen einer zweiten Ressourcenabfrageanforderung, die von dem zweiten Client eingereicht wird, und Abfragen einer Ressource eines Objekts unter der Zielkontoadresse gemäß einem öffentlichen Client-Schlüssel, der in der zweiten Ressourcenabfrageanforderung getragen wird; und
Zurücksenden eines Abfrageergebnisses bezüglich der Ressource unter der Zielkontoadresse an den zweiten Client.

11. Das Verfahren nach Anspruch 1, wobei der erste Client ferner eine darin gespeicherte Zielkontoadresse aufweist, wobei die Zielkontoadresse basierend auf dem öffentlichen Client-Schlüssel berechnet wird, und wobei das Verfahren ferner umfasst:
Empfangen des Objektpassworts und eines Zielobjektpassworts, das zum Ändern des Objektpassworts konfiguriert ist, falls eine Passwortänderungsanforderung für die Zielkontoadresse erhalten wird;
Entschlüsseln der verschlüsselten Daten unter Verwendung des empfangenen Objektpassworts, um den privaten Client-Schlüssel zu erhalten;
Berechnen des öffentlichen Client-Schlüssels gemäß dem privaten Client-Schlüssel und Berechnen einer Kontoadresse des ersten Clients gemäß dem öffentlichen Client-Schlüssel; und
Verschlüsseln des privaten Client-Schlüssels unter Verwendung des Zielobjektpassworts, um geänderte verschlüsselte Daten zu erhalten, und Speichern der geänderten verschlüsselten Daten, falls die berechnete Kontoadresse gleich der Zielkontoadresse ist.

12. Das Verfahren nach Anspruch 1, wobei, falls der erste Client basierend auf einem Blockchain-Netzwerk aufgebaut ist, die Cloud-Vorrichtung eine Knotenvorrichtung eines Blockchain-Knotens im Blockchain-Netzwerk ist;
wobei das Verfahren ferner umfasst:
Zusammenstellen (S601), falls eine Transaktionsinitiierungsanforderung erhalten wird, einer zu initiierenden Zieltransaktion gemäß einer Anzeige der Transaktionsinitiierungsanforderung;
Empfangen (S602) des Objektpassworts und Entschlüsseln der verschlüsselten Daten basierend auf dem empfangenen Objektpasswort, um den privaten Client-Schlüssel zu erhalten;
Signieren (S603) der Zieltransaktion basierend auf dem privaten Client-Schlüssel, um eine Transaktionssignatur zu erhalten; und
Senden (S604) der Zieltransaktion und der Transaktionssignatur an das Blockchain-Netzwerk, wobei das Blockchain-Netzwerk die Zieltransaktion ausführt, nachdem erfolgreich ein Konsens über die Zieltransaktion basierend auf der Transaktionssignatur erreicht wurde, und die Zieltransaktion in das Blockchain-Netzwerk hochlädt.

13. Eine Datenverarbeitungsvorrichtung zur Verwendung in einer Endgerätvorrichtung, die einen ersten Client umfasst, wobei der erste Client ein Schlüsselpaar aufweist, wobei das Schlüsselpaar einen öffentlichen Client-Schlüssel und einen privaten Client-Schlüssel umfasst, wobei der erste Client verschlüsselte Daten des privaten Client-Schlüssels speichert, wobei die verschlüsselten Daten durch Verschlüsseln des privaten Client-Schlüssels gemäß einem Objektpasswort erhalten werden, und wobei die Vorrichtung umfasst:
ein Empfangsmodul (11), konfiguriert zum Empfangen des Objektpassworts als Reaktion auf das Erhalten einer Cloud-Hosting-Anforderung für die verschlüsselten Daten;
ein Entschlüsselungsmodul (12), konfiguriert zum Entschlüsseln der verschlüsselten Daten unter Verwendung des empfangenen Objektpassworts, um den privaten Client-Schlüssel zu erhalten;
ein Signaturmodul (13), konfiguriert zum Signieren der verschlüsselten Daten basierend auf dem privaten Client-Schlüssel, um eine Signatur der verschlüsselten Daten zu erhalten; und
ein Sendemodul (14), konfiguriert zum Senden des öffentlichen Client-Schlüssels, der verschlüsselten Daten und der Signatur der verschlüsselten Daten an eine Cloud-Vorrichtung des ersten Clients, wobei der öffentliche Client-Schlüssel und die Signatur der verschlüsselten Daten zum Verifizieren der verschlüsselten Daten an der Cloud-Vorrichtung verwendet werden, bevor die verschlüsselten Daten in der Cloud-Vorrichtung gespeichert werden.

14. Ein Computerprogrammprodukt, umfassend ein Computerprogramm/eine Computeranweisung, wobei das Computerprogramm/die Computeranweisung, wenn es oder sie von einem Prozessor ausgeführt wird, Operationen des Verfahrens nach einem der Ansprüche 1 bis 12 implementiert.

15. Ein computerlesbares Speichermedium mit einem darin gespeicherten Computerprogramm, wobei das Computerprogramm geeignet ist, von einem Prozessor geladen zu werden, um das Verfahren nach einem der Ansprüche 1 bis 12 auszuführen.

## Revendications

1. Procédé de traitement de données, appliqué à un dispositif terminal comprenant un premier client, le premier client ayant une paire de clés, la paire de clés comprenant une clé publique de client et une clé privée de client, le premier client stockant des données chiffrées de la clé privée de client, les données chiffrées étant obtenues par chiffrement de la clé privée de client selon un mot de passe d'objet, et le procédé comprenant:
la réception (S101) du mot de passe d'objet en réponse à l'obtention d'une demande d'hébergement en nuage des données chiffrées;
le déchiffrement (S102) des données chiffrées à l'aide du mot de passe d'objet reçu pour obtenir la clé privée de client;
la signature (S103) des données chiffrées à l'aide de la clé privée de client afin d'obtenir une signature des données chiffrées; et
la transmission (S104) de la clé publique de client, les données chiffrées et la signature des données chiffrées à un dispositif en nuage du premier client, la clé publique de client et la signature des données chiffrées étant utilisées pour vérifier les données chiffrées au niveau du dispositif en nuage avant que les données chiffrées ne soient stockées dans le dispositif en nuage.

2. Procédé selon la revendication 1, dans lequel le dispositif terminal comprend un environnement de sécurité pouvant être appelé par le premier client, et l'environnement de sécurité est un environnement d'exécution isolé du premier client; et
les opérations effectuées par le premier client en appelant l'environnement de sécurité comprennent:
la réception du mot de passe d'objet;
le déchiffrement des données chiffrées à l'aide du mot de passe d'objet reçu pour obtenir la clé privée de client; et
la signature des données chiffrées basée sur la clé privée de client afin d'obtenir une signature des données chiffrées, dans lequel
la signature des données chiffrées obtenues par le premier client est obtenue dans l'environnement de sécurité appelé.

3. Procédé selon la revendication 1, le procédé comprenant en outre:
la réception du mot de passe d'objet et la génération de la paire de clés du premier client, en réponse à la réception d'une demande de création de compte;
le chiffrement de la clé privée de client dans la paire de clés à l'aide du mot de passe d'objet reçu pour obtenir les données chiffrées; et
la génération d'une adresse de compte cible du premier client à l'aide de la clé publique de client de la paire de clés, et le stockage conjointement l'adresse de compte cible et les données chiffrées, dans lequel
le premier client est configuré pour effectuer le traitement de service sur l'adresse de compte cible conformément aux données chiffrées stockées.

4. Procédé selon la revendication 1, le procédé comprenant en outre:
la réception (S201) du mot de passe d'objet en réponse à l'obtention d'une demande d'enregistrement d'adresse;
le déchiffrement (S202) des données chiffrées à l'aide du mot de passe d'objet reçu pour obtenir la clé client privée;
l'obtention (S203) des informations d'identité, et la signature de la clé publique de client et des informations d'identité sur la base de la clé privée de client afin d'obtenir une signature d'identité;
la transmission (S204) de la signature d'identité, des informations d'identité et de la clé publique de client au dispositif en nuage, dans lequel la clé publique de client et la signature d'identité sont utilisées pour vérifier les informations d'identité au niveau du dispositif en nuage avant que l'adresse de compte cible et les informations d'identité ne soient stockées conjointement dans le dispositif en nuage, l'adresse de compte cible étant calculée par le dispositif en nuage sur la base de la clé publique de client; et
la réception (S205) d'une signature d'adresse renvoyée par le dispositif en nuage, dans lequel la signature d'adresse est obtenue par signature de l'adresse de compte cible stockée à l'aide d'une clé privée du dispositif en nuage au niveau du dispositif en nuage, et la signature d'adresse indiquant l'enregistrement réussi de l'adresse de compte cible.

5. Procédé selon la revendication 4, comprenant en outre:
l'obtention (S301) des informations d'identité si les données chiffrées stockées dans le premier client sont perdues et qu'une demande de récupération des données chiffrées en nuage est obtenue;
la transmission (S302) des informations d'identité au dispositif en nuage;
la réception (S303) de l'au moins une adresse de compte stockée conjointement avec les informations d'identité sur le dispositif en nuage, et la sélection, parmi l'au moins une adresse de compte reçue, de l'adresse de compte cible qui doit être récupérée;
la transmission (S304) de l'adresse de compte cible au dispositif en nuage, dans lequel le dispositif en nuage obtient les données chiffrées; et
la réception (S305) en provenance du dispositif en nuage des secondes données chiffrées qui sont stockées conjointement avec l'adresse de compte cible au niveau du dispositif en nuage, et la récupération des données chiffrées sur la base des secondes données chiffrées et de l'adresse de compte cible;
dans lequel la réception des données chiffrées sur la base des secondes données chiffrées et de l'adresse de compte cible comprend:
la réception du mot de passe d'objet;
le déchiffrement des secondes données chiffrées dur la base du mot de passe d'objet reçu pour obtenir la clé privée de client;
le calcul de la clé publique de client à partir de la clé privée de client, et le calcul d'une adresse de compte du premier client à partir de la clé publique de client; et
le stockage conjoint de l'adresse de compte cible et des secondes données chiffrées dans le premier client si l'adresse de compte calculée est identique à l'adresse de compte cible.

6. Procédé selon la revendication 1, le procédé comprenant en outre:
la réception (S401) du mot de passe d'objet en réponse à l'obtention d'une demande de sauvegarde locale de la clé privée de client;
le déchiffrement (S402) des données chiffrées sur la base du mot de passe d'objet reçu pour obtenir la clé privée de client;
la signature (S403) des données chiffrées à l'aide de la clé privée de client afin d'obtenir la signature des données chiffrées;
le codage (S404) des données chiffrées et de la signature des données chiffrées afin d'obtenir des données codées; et
la sortie (S405) des données codées, les données codées sorties devant être exportées et stockées dans un espace de stockage local du dispositif terminal, et l'espace de stockage local n'appartient pas au premier client ;
dans lequel le procédé comprend en outre:
l'obtention des données codées importées à partir de l'espace de stockage local si les données chiffrées stockées dans le premier client sont perdues et qu'une demande de récupération de données chiffrées localement est obtenue;
le décodage des données codées pour obtenir les données chiffrées;
la réception du mot de passe d'objet et le déchiffrement des données chiffrées obtenues par le décodage basé sur le mot de passe d'objet reçu afin d'obtenir la clé privée de client;
le calcul de la clé publique de client à partir de la clé privée de client, et le calcul d'une adresse de compte cible du premier client à partir de la clé publique de client; et
le stockage conjoint de l'adresse de compte cible et des données chiffrées obtenues par le décodage dans le premier client.

7. Procédé selon la revendication 1, dans lequel l'opération consistant à signer les données chiffrées basée sur la clé privée de client afin d'obtenir une signature des données chiffrées comprend:
le calcul de hachage sur les données chiffrées afin d'obtenir une valeur de hachage des données chiffrées; et
le chiffrement de la valeur de hachage des données chiffrées à l'aide de la clé privée de client afin d'obtenir la signature des données chiffrées.

8. Procédé selon la revendication 1, dans lequel une adresse de compte cible du premier client et les données chiffrées sont stockées conjointement, l'adresse de compte cible est calculée sur la base de la clé publique de client, et le procédé comprend en outre:
la sortie (S501) d'au moins une adresse de compte du premier client en réponse à la réception d'une première demande de connexion soumise par un deuxième client, la première demande de connexion transportant un identifiant client du deuxième client;
la sélection (S502) de l'adresse de compte cible à laquelle il faut se connecter parmi l'au moins une adresse de compte émise, et l'obtention des données chiffrées stockées conjointement avec l'adresse de compte cible;
la réception (S503) du mot de passe d'objet et le déchiffrement des données chiffrées obtenues sur la base du mot de passe d'objet reçu afin d'obtenir la clé privée de client;
la génération (S504) d'une clé de communication entre le premier client et le deuxième client, et la signature de la clé de communication à l'aide de utilisant la clé privée de client afin d'obtenir une signature de la clé de communication;
le chiffrement (S505) de la clé de communication à l'aide d'une clé publique du deuxième client pour obtenir une clé de communication chiffrée;
le renvoi (S506) de la clé publique de client, de la signature de la clé de communication et de la clé de communication chiffrée au deuxième client, la clé de communication chiffrée étant utilisée pour le déchiffrement à l'aide d'une clé privée de client du deuxième client afin d'obtenir la clé de communication, et la signature de la clé de communication étant utilisée pour vérifier la clé de communication avant que la clé de communication et l'adresse du compte cible ne soient stockées conjointement au niveau du deuxième client; et
la réception (S507) d'informations indiquant une connexion provenant du deuxième client, et le stockage conjoint de l'identifiant du deuxième client, de l'adresse du compte cible et de la clé de communication.

9. Procédé selon la revendication 8, le procédé comprenant en outre:
la sortie d'au moins une adresse de compte du premier client si une deuxième demande de connexion soumise par le deuxième client est reçue après que le premier client a été déconnecté du deuxième client, dans lequel le moment d'initiation de la deuxième demande de connexion est postérieur au moment d'initiation de la première demande de connexion, et la deuxième demande de connexion transporte l'identifiant client du deuxième client;
la sélection de l'adresse de compte cible auquel il faut se connecter parmi l'au moins une adresse de compte générée;
le chiffrement de la clé de communication à l'aide de la clé publique du deuxième client pour obtenir la clé de communication chiffrée, si la clé de communication stockée conjointement avec l'adresse de compte cible et avec l'identifiant de client existe;
le renvoi de la clé de communication chiffrée et de l'adresse de compte cible au deuxième client, afin que le deuxième client déchiffre la clé de communication chiffrée à l'aide de la clé privée du deuxième client pour obtenir la clé de communication, et génère des informations d'invite indiquant une connexion au premier client si la clé de communication associée à l'adresse de compte cible existe; et
la réception des informations d'invite indiquant la connexion provenant du deuxième client.

10. Procédé selon la revendication 1, le procédé comprenant en outre:
la sortie d'au moins une adresse de compte du premier client si la réception d'une première demande de recherche de ressource initiée par un deuxième client, dans lequel la première demande de vérification de ressource transporte un nombre aléatoire généré par le deuxième client;
la sélection d'une adresse de compte cible qui doit être interrogée parmi l'au moins une adresse de compte sortie;
la réception du mot de passe d'objet et le déchiffrement des données chiffrées obtenues sur la base du mot de passe d'objet reçu afin d'obtenir la clé privée de client;
la signature du nombre aléatoire à l'aide de la clé privée de client pour obtenir une signature de nombre aléatoire;
le renvoi de la signature aléatoire et de la clé publique de client au deuxième client;
la réception d'une deuxième requête de recherche de ressource soumise par le deuxième client, et l'interrogation d'une ressource d'un objet sous l'adresse de compte cible conformément à une clé publique de client contenue dans la deuxième demande de recherche de ressource; et
le renvoi au deuxième client du résultat d'une demande concernant la ressource sous l'adresse de compte cible.

11. Procédé selon la revendication 1, dans lequel le premier client dispose d'une adresse de compte cible stockée en son sein, l'adresse de compte cible est calculée sur la base de la clé publique de client, et le procédé comprend en outre:
la réception du mot de passe d'objet et d'un mot de passe d'objet cible configuré pour modifier le mot de passe d'objet, si une demande de modification du mot de passe est obtenue pour l'adresse du compte cible ;
le déchiffrement des données chiffrées à l'aide du mot de passe d'objet reçu pour obtenir la clé privée de client;
le calcul de la clé publique de client conformément à la clé privée de client, et le calcul d'une adresse de compte du premier client conformément à la clé publique de client; et
le chiffrement de la clé privée de client à l'aide du mot de passe d'objet cible pour obtenir des données chiffrées modifiées et le stockage des données chiffrées modifiées, si l'adresse de compte calculée est la même que l'adresse de compte cible.

12. Procédé selon la revendication 1, dans lequel si le premier client est construit sur la base d'un réseau de chaînes de blocs, le dispositif en nuage est un dispositif de nœud d'un nœud de chaînes de blocs dans le réseau de chaînes de blocs;
dans lequel le procédé comprend en outre:
l'assemblage (S601), si une demande d'initiation de transaction est obtenue, d'une transaction cible à initier conformément à une indication de la demande d'initiation de transaction;
la réception (S602) du mot de passe d'objet et le déchiffrement des données chiffrées sur la base du mot de passe d'objet chiffré afin d'obtenir la clé privée de client;
la signature (S603) de la transaction ciblée sur la base de la clé privée de client afin d'obtenir une signature de transaction; et
la diffusion (S604) de la transaction cible et de la signature de transaction au réseau de chaînes de blocs, dans lequel le réseau de chaînes de blocs exécute la transaction cible après avoir réussi à atteindre un consensus concernant la transaction cible sur la base de la signature de transaction, et télécharge la transaction cible vers le réseau de chaînes de blocs.

13. Appareil de traitement de données, utilisé dans un dispositif terminal comprenant un premier client, le premier client ayant une paire de clés, la paire de clés comprenant une clé publique de client et une clé privée de client, le premier client stockant des données chiffrées de la clé privée de client, les données chiffrées étant obtenues par chiffrement de la clé privée de client selon un mot de passe d'objet, et l'appareil comprenant:
un module de réception (S101), configuré pour recevoir du mot de passe d'objet en réponse à l'obtention d'une demande d'hébergement en nuage des données chiffrées;
un module de déchiffrement (12), configuré pour déchiffrer les données chiffrées à l'aide du mot de passe d'objet reçu pour obtenir la clé privée de client;
un module de signature (13), configuré pour signer les données chiffrées à l'aide de la clé privée de client afin d'obtenir une signature des données chiffrées; et
un module de transmission (14), configuré pour transmettre la clé publique de client, les données chiffrées et la signature des données chiffrées à un dispositif en nuage du premier client, la clé publique de client et la signature des données chiffrées étant utilisées pour vérifier les données chiffrées au niveau du dispositif en nuage avant que les données chiffrées ne soient stockées dans le dispositif en nuage.

14. Produit programme informatique, comprenant un programme informatique/une instruction, le programme informatique/l'instruction, lorsqu'il/elle est exécuté(e) par un processeur, mettant en œuvre le procédé selon l'une quelconque des revendications 1 à 12.

15. Support d'enregistrement lisible par ordinateur, stockant un programme informatique, le programme informatique étant conçu pour être chargé par un processeur afin d'exécuter le procédé selon l'une quelconque des revendications 1 à 12.
